# EUROPEAN PATENT APPLICATION

(11) **EP 4 712 555 A1**
(43) Date of publication of application: **18.03.2026**
(21) Application number: 23936179.3
(22) Date of filing: 11.05.2023
(51) Int. Cl.: H04W 28/24

(54) **MEASUREMENT METHOD AND APPARATUS, AND COMMUNICATION DEVICE, COMMUNICATION SYSTEM AND STORAGE MEDIUM**

(71) Applicant: Beijing Xiaomi Mobile Software Co., Ltd., Beijing 100085 (CN)
(72) Inventor: WU, Jinhua, Beijing 100085 (CN); SHEN, Yang, Beijing 100085 (CN)
(74) Representative: Stöckeler, Ferdinand
(86) International application number: PCT/CN2023/093715
(87) International publication number: WO 2024/229866

(57) **Abstract**

The present disclosure relates to a measurement method and apparatus, and a communication device, a communication system and a storage medium. The method may be executed by an application function (AF), and the method comprises: sending a first message to a policy control function (PCF), wherein the first message indicates a first node and/or a sending mode for a measurement result of a quality of service (QoS) data flow, and the first node is used for measuring the QoS data flow. A first node for measuring a QoS data flow and a sending mode for a measurement result of the QoS data flow can be indicated according to traffic characteristics, thereby improving the user experience.

## Description

### FIELD

The present disclosure relates to the field of communication technology, in particular to a measurement method, a measurement apparatus, a communication device, a communication system, and a storage medium.

### BACKGROUND

Mobile media services, extended Reality (XR) services such as augmented reality (AR)/virtual reality (VR), cloud games, and video-based robot or unmanned aerial vehicle remote control services will account for a growing share of traffic. The XR service relates to a multimodal data flow, and usually data flows in multimodal data have a certain degree of, or even strong, correlation, e.g., the synchronization between an audio stream and a video stream, and the synchronization between tactile and visual sense. Hence, for an extended reality media (XRM) service and an interactive media service, a service-related quality of service (QoS) characteristic needs to be taken into consideration.

### SUMMARY

An object of the present disclosure is to provide a measurement method, a measurement apparatus, a communication device, a communication system and a storage medium.

In a first aspect, the present disclosure provides in some embodiments a measurement method, executed by an application function (AF), including: sending a first message to a policy control function (PCF). The first message indicates a first node and/or a sending mode for a measurement result of a QoS data flow, and the first node is configured to measure the QoS data flow.

In a second aspect, the present disclosure provides in some embodiments a measurement method, executed by a PCF, including: receiving a first message sent by an AF, in which the first message indicates a first node and/or a sending mode for a measurement result of a QoS data flow, and the first node is configured to measure the QoS data flow; and sending a third message to an SMF based on the first message, in which the third message is used by the SMF to configure the first node for measuring the QoS data flow and/or the sending mode for the measurement result of the QoS data flow.

In a third aspect, the present disclosure provides in some embodiments a measurement method, executed by an SMF, including: receiving a third message sent by a PCF, in which the third message indicates a first node and/or a sending mode for a measurement result of a QoS data flow, and the first node is configured to measure the QoS data flow; and configuring the first node for measuring the QoS data flow and/or the sending mode for the measurement result of the QoS data flow based on the third message.

In a fourth aspect, the present disclosure provides in some embodiments a measurement method, executed by a UPF, including: receiving a sixth message sent by an SMF, in which the sixth message includes a first message, the first message indicates a first node and/or a sending mode for a measurement result of the QoS data flow, and the first node is configured to measure the QoS data flow; and updating session context information about the UPF based on the sixth message.

In a fifth aspect, the present disclosure provides in some embodiments a measurement method, executed by an access network device, including: receiving a seventh message sent by an AMF. The seventh message is sent by the AMF based on a fourth message sent by an SMF, the fourth message includes a first message, the first message indicates a first node and/or a sending mode for a measurement result of a QoS data flow, and the first node is configured to measure the QoS data flow.

In a sixth aspect, the present disclosure provides in some embodiments a measurement method, executed by a communication system, the communication system including an AF, and the measurement method including: sending, by the AF, a first message to a PCF, in which the first message indicates a first node and/or a sending mode for a measurement result of a QoS data flow, and the first node is configured to measure the QoS data flow.

In a seventh aspect, the present disclosure provides in some embodiments a measurement method, executed by a communication system, the communication system including an AF, a PCF, an SMF, a UPF and an access network device, and the measurement method including: sending, by the AF, a first message to the PCF, in which the first message indicates a first node and/or a sending mode for a measurement result of a QoS data flow, and the first node is configured to measure the QoS data flow; sending, by the PCF, a third message to the SMF based on the first message, in which the third message is used by the SMF to configure the first node for measuring the QoS data flow and/or the sending mode for the measurement result of the QoS data flow; configuring, by the SMF, the first node for measuring the QoS data flow and/or the sending mode for the measurement result of the QoS data flow based on the third message; receiving, by the UPF, a sixth message sent by the SMF, and updating session context information about the UPF based on the sixth message, in which the sixth message includes the first message; and receiving, by the access network device, a seventh message sent by an AMF, in which the seventh message is sent by the AMF based on a fourth message sent by the SMF, and the fourth message includes the first message.

In an eighth aspect, the present disclosure provides in some embodiments a first measurement apparatus, including: a sending module configured to send a first message to a PCF. The first message indicates a first node and/or a sending mode for a measurement result of a QoS data flow, and the first node is configured to measure the QoS data flow.

In a ninth aspect, the present disclosure provides in some embodiments a second measurement apparatus, including: a reception module configured to receive a first message sent by an AF, in which the first message indicates a first node and/or a sending mode for a measurement result of a QoS data flow, and the first node is configured to measure the QoS data flow; and a sending module configured to send a third message to an SMF based on the first message, in which the third message is used by the SMF to configure the first node for measuring the QoS data flow and/or the sending mode for the measurement data of the QoS flow.

In a tenth aspect, the present disclosure provides in some embodiments a third measurement apparatus, including: a reception module configured to receive a third message sent by a PCF, in which the third message indicates a first node and/or a sending mode for a measurement result of a QoS data flow, and the first node is configured to measure the QoS data flow; and a configuration module configured to configure the first node for measuring the QoS data flow and/or the sending mode for the measurement result of the QoS data flow based on the third message.

In an eleventh aspect, the present disclosure provides in some embodiments a fourth measurement apparatus, including: a reception module configured to receive a sixth message sent by an SMF, in which the sixth message includes a first message, the first message indicates a first node and/or a sending mode for a measurement result of a QoS data flow, and the first node is configured to measure the QoS data flow; and an updating module configured to update session context information about a UPF based on the sixth message.

In a twelfth aspect, the present disclosure provides in some embodiments a fifth measurement apparatus, including: a reception module configured to receive a seventh message sent by an AMF. The seventh message is sent by the AMF based on a fourth message sent by an SMF, the fourth message includes a first message, the first message indicates a first node and/or a sending mode for a measurement result of a QoS data flow, and the first node is configured to measure the QoS data flow.

In a thirteenth aspect, the present disclosure provides in some embodiments a communication device, including: one or more processors. The one or more processors are configured to call a computer instruction to enable the communication device to implement the measurement method in the first aspect, the second aspect, the third aspect, the fourth aspect or the fifth aspect.

In a fourteenth aspect, the present disclosure provides in some embodiments a communication system, including an AF. The AF is configured to implement the measurement method in the first aspect.

In a fifteenth aspect, the present disclosure provides in some embodiments a communication system, including an AF, a PCF, an SMF, a UPF, an access network device and a terminal. The AF is configured to implement the measurement method in the first aspect, the PCF is configured to implement the measurement method in the second, the SMF is configured to implement the measurement method in the third aspect, the UPF is configured to implement the measurement method in the fourth aspect, and the access network device is configured to implement the measurement method in the fifth aspect.

In a sixteenth aspect, the present disclosure provides in some embodiments a storage medium storing therein instructions. In a case that the instructions are executed by a communication device, the communication device implements the measurement method in the first aspect, the second aspect, the third aspect, the fourth aspect or the fifth aspect.

### BRIEF DESCRIPTION OF THE DRAWINGS

In order to illustrate the technical solutions of the embodiments of the present disclosure or the background in a clearer manner, the drawings desired for the embodiments of the present disclosure will be described hereinafter briefly. The following drawings merely relate to some embodiments of the present disclosure, and shall not be construed as limiting the protection scope of the present disclosure.
FIG. 1 is a schematic view showing an architecture of a communication system according to an embodiment of the present disclosure;
FIG. 2 is a schematic view showing an interaction of a measurement method according to an embodiment of the present disclosure;
FIG. 3a is a flow chart of a measurement method according to an embodiment of the present disclosure;
FIG. 3b is another flow chart of a measurement method according to an embodiment of the present disclosure;
FIG. 3c is yet another flow chart of a measurement method according to an embodiment of the present disclosure;
FIG. 3d is still yet another flow chart of a measurement method according to an embodiment of the present disclosure;
FIG. 3e is still yet another flow chart of a measurement method according to an embodiment of the present disclosure;
FIG. 3f is still yet another flow chart of a measurement method according to an embodiment of the present disclosure;
FIG. 3g is still yet another flow chart of a measurement method according to an embodiment of the present disclosure;
FIG. 3h is still yet another flow chart of a measurement method according to an embodiment of the present disclosure;
FIG. 4a is a flow chart of a measurement method according to an embodiment of the present disclosure;
FIG. 4b is another flow chart of a measurement method according to an embodiment of the present disclosure;
FIG. 4c is yet another flow chart of a measurement method according to an embodiment of the present disclosure;
FIG. 4d is still yet another flow chart of a measurement method according to an embodiment of the present disclosure;
FIG. 5a is a flow chart of a measurement method according to an embodiment of the present disclosure;
FIG. 5b is another flow chart of a measurement method according to an embodiment of the present disclosure;
FIG. 5c is yet another flow chart of a measurement method according to an embodiment of the present disclosure;
FIG. 5d is still yet another flow chart of a measurement method according to an embodiment of the present disclosure;
FIG. 6a is a flow chart of a measurement method according to an embodiment of the present disclosure;
FIG. 6b is another flow chart of a measurement method according to an embodiment of the present disclosure;
FIG. 6c is yet another flow chart of a measurement method according to an embodiment of the present disclosure;
FIG. 6d is still yet another flow chart of a measurement method according to an embodiment of the present disclosure;
FIG. 6e is still yet another flow chart of a measurement method according to an embodiment of the present disclosure;
FIG. 7a is a flow chart of a measurement method according to an embodiment of the present disclosure;
FIG. 7b is another flow chart of a measurement method according to an embodiment of the present disclosure;
FIG. 7c is yet another flow chart of a measurement method according to an embodiment of the present disclosure;
FIG. 7d is still yet another flow chart of a measurement method according to an embodiment of the present disclosure;
FIG. 7e is still yet another flow chart of a measurement method according to an embodiment of the present disclosure;
FIG. 8 is a flow chart of a measurement method according to an embodiment of the present disclosure;
FIG. 9 is a schematic view showing an interaction of the measurement method according to an embodiment of the present disclosure;
FIG. 10 is another schematic view showing an interaction of the measurement method according to an embodiment of the present disclosure;
FIG. 11 is yet another schematic view showing an interaction of the measurement method according to an embodiment of the present disclosure;
FIG. 12a is a schematic view showing a first measurement apparatus according to an embodiment of the present disclosure;
FIG. 12b is a schematic view showing a second measurement apparatus according to an embodiment of the present disclosure;
FIG. 12c is a schematic view showing a third measurement apparatus according to an embodiment of the present disclosure;
FIG. 12d is a schematic view showing a fourth measurement apparatus according to an embodiment of the present disclosure;
FIG. 12e is a schematic view showing a fifth measurement apparatus according to an embodiment of the present disclosure;
FIG. 12f is a schematic view showing a sixth measurement apparatus according to an embodiment of the present disclosure;
FIG. 13a is a schematic view showing a communication device according to an embodiment of the present disclosure; and
FIG. 13b is a schematic view showing a chip according to an embodiment of the present disclosure.

### DETAILED DESCRIPTION

The present disclosure provides in some embodiments a measurement method, a measurement apparatus, a communication device, a communication system, and a storage medium.

In a first aspect, the present disclosure provides in some embodiments a measurement method, which is executed by an AF, and includes: sending a first message to a PCF. The first message indicates a first node and/or a sending mode for a measurement result of a QoS data flow, and the first node is configured to measure the QoS data flow.

In the above embodiments of the present disclosure, the AF indicates the first node for measuring the QoS data flow and/or the sending mode for the measurement result of the QoS data flow based on service characteristics, so as to flexibly select the node for performing the measurement and the sending mode for the measurement result, thereby to improve the user experience.

With regard to some embodiments in the first aspect, in some embodiments of the present disclosure, the first node includes at least one of: an access network device; or a UPF.

In the above embodiments of the present disclosure, based on the service characteristics, the AF indicates the access network device to measure the QoS data flow, or indicates the UPF to measure the QoS data flow, or indicates the access network device and the UPF to measure the QoS data flow, and for different services, different first nodes are selected to perform the measurement of the QoS data flow, so as to improve a measurement effect of the QoS data flow, thereby to improve the user experience.

With regard to some embodiments in the first aspect, in some embodiments of the present disclosure, the sending mode for the measurement result of the QoS data flow includes at least one of: sending, by the access network device, the measurement result of the QoS data flow to the AF via an SMF and the PCF; sending, by the access network device, the measurement result of the QoS data flow to the AF via the UPF, the SMF and the PCF; sending by the access network device, the measurement result of the QoS data flow to the AF via the UPF; sending, by the UPF, the measurement result of the QoS data flow to the AF via the SMF and the PCF; or sending, by the UPF, the measurement result of the QoS data flow to the AF.

In the above embodiments of the present disclosure, the AF indicates, based on the service characteristics, the sending mode for the measurement result of the QoS data flow, so as to meet the requirements on sending different services, thereby to improve the user experience.

With regard to some embodiments in the first aspect, in some embodiments of the present disclosure, the sending mode for the measurement result of the QoS data flow includes at least one of: sending, by the access network device, the measurement result of the QoS data flow to the AF via the SMF, the PCF and a NEF; sending, by the access network device, the measurement result of the QoS data flow to the AF via the UPF, the SMF, the PCF and the NEF; sending, by the access network device, the measurement result of the QoS data flow to the AF via the UPF and the NEF; sending, by the UPF, the measurement result of the QoS data flow to the AF via the SMF, the PCF and the NEF; or sending, by the UPF, the measurement result of the QoS data flow to the AF via the NEF.

In the above embodiments of the present disclosure, the AF indicates, based on the service characteristics, the sending mode for the measurement result of the QoS data flow, so as to meet the requirements on sending different services.

With regard to some embodiments in the first aspect, in some embodiments of the present disclosure, the sending the first message to the PCF includes sending the first message to the PCF via the NEF.

In the above embodiments of the present disclosure, the first message is sent to the PCF via the NEF, so as to be adapted to more services, thereby to further improve the user experience.

With regard to some embodiments in the first aspect, in some embodiments of the present disclosure, the sending the first message to the PCF includes sending an AF session establishment request to the PCF, and the AF session establishment request includes the firs message.

In the above embodiments of the present disclosure, the session establishment request carries the first message, so as to indicate the first node for measuring the QoS data flow and/or the sending mode for the measurement result of the QoS data flow without requiring more network resource.

With regard to some embodiments in the first aspect, in some embodiments of the present disclosure, the measurement method further includes receiving a second message sent by a terminal, and the second message includes QoS requirement information. The sending the first message to the PCF includes sending the first message to the PCF based on the second message.

In the above embodiments of the present disclosure, upon the receipt of the second message sent by the terminal, the AF sends the first message to the PCF based on the second message, so as to determine the first message based on the QoS requirement information in the second message, thereby to indicate the first node for measuring the QoS data flow and/or the sending mode for the measurement result of the QoS data flow in a more accurate manner.

In a second aspect, the present disclosure provides in some embodiments a measurement method, which is executed by a PCF, and includes: receiving a first message sent by an AF; and sending a third message to an SMF based on the first message. The first message indicates a first node and/or a sending mode for a measurement result of a QoS data flow, and the first node is configured to measure the QoS data flow. The third message is used by the SMF to configure the first node for measuring the QoS data flow and/or the sending mode for the measurement result of the QoS data flow.

With regard to some embodiments in the second aspect, in some embodiments of the present disclosure, the first node includes at least one of: an access network device; or a UPF.

With regard to some embodiments in the second aspect, in some embodiments of the present disclosure, the sending mode for the measurement result of the QoS data flow includes at least one of: sending, by the access network device, the measurement result of the QoS data flow to the AF via the SMF and the PCF; sending, by the access network device, the measurement result of the QoS data flow to the AF via the UPF, the SMF and the PCF; sending, by the access network device, the measurement result of the QoS data flow to the AF via the UPF; sending, by the UPF, the measurement result of the QoS data flow to the AF via the SMF and the PCF; or sending, by the UPF, the measurement result of the QoS data flow to the AF.

With regard to some embodiments in the second aspect, in some embodiments of the present disclosure, the sending mode for the measurement result of the QoS data flow includes at least one of: sending, by the access network device, the measurement result of the QoS data flow to the AF via the SMF, the PCF and a NEF; sending, by the access network device, the measurement result of the QoS data flow to the AF via the UPF, the SMF, the PCF and the NEF; sending, by the access network device, the measurement result of the QoS data flow to the AF via the UPF and the NEF; sending by the UPF, the measurement result of the QoS data flow to the AF via the SMF, the PCF and the NEF; or sending, by the UPF, the measurement result of the QoS data flow to the AF via the NEF.

With regard to some embodiments in the second aspect, in some embodiments of the present disclosure, the receiving the first message sent by the AF includes receiving the first message sent by the AF via the NEF.

With regard to some embodiments in the second aspect, in some embodiments of the present disclosure, the receiving the first message sent by the AF includes receiving an AF session establishment request sent by the AF, and the AF session establishment request includes the first message.

In a third aspect, the present disclosure provides in some embodiments a measurement method, which is executed by an SMF, and includes: receiving a third message sent by a PCF, the third message indicating a first node and/or a sending mode for a measurement result of a QoS data flow, and the first node being configured to measure the QoS data flow; and configuring the first node for measuring the QoS data flow and/or the sending mode for the measurement result of the QoS data flow based on the third message.

With regard to some embodiments in the third aspect, in some embodiments of the present disclosure, the measurement method further includes: sending a fourth message to an AMF, the fourth message including a first message; receiving a fifth message sent by the AMF; and updating session context information about the SMF based on the fifth message.

With regard to some embodiments in the third aspect, in some embodiments of the present disclosure, the measurement method further includes sending a sixth message to a UPF, the sixth message indicates session context information about the UPF is to be updated, and the sixth message includes the first message.

With regard to some embodiments in the third aspect, in some embodiments of the present disclosure, the first node includes at least one of: an access network device; or the UPF.

With regard to some embodiments in the third aspect, in some embodiments of the present disclosure, the sending mode for the measurement result of the QoS data flow includes at least one of: sending, by the access network device, the measurement result of the QoS data flow to an AF via the SMF and the PCF; sending, by the access network device, the measurement result of the QoS data flow to the AF via the UPF, the SMF and the PCF; sending, by the access network device, the measurement result of the QoS data flow to the AF via the UPF; sending, by the UPF, the measurement result of the QoS data flow to the AF via the SMF and the PCF; or sending, by the UPF, the measurement result of the QoS data flow to the AF.

With regard to some embodiments in the third aspect, in some embodiments of the present disclosure, the sending mode for the measurement result of the QoS data flow includes at least one of: sending, by the access network device, the measurement result of the QoS data flow to the AF via the SMF, the PCF and a NEF; sending, by the access network device, the measurement result of the QoS data flow to the AF via the UPF, the SMF and the PCF; sending, by the access network device, the measurement result of the QoS data flow to the AF via the UPF and the NEF; sending, by the UPF, the measurement result of the QoS data flow to the AF via the SMF, the PCF and the NEF; or sending, by the UPF, the measurement result of the QoS data flow to the AF via the NEF.

In a fourth aspect, the present disclosure provides in some embodiments a measurement method, which is executed by a UPF, and includes: receiving a sixth message sent by an SMF, the sixth message including a first message, the first message indicating a first node and/or a sending mode for a measurement result of the QoS data flow, and the first node being configured to measure the QoS data flow; and updating session context information about the UPF based on the sixth message.

With regard to some embodiments in the fourth aspect, in some embodiments of the present disclosure, the first node includes at least one of: an access network device; or a UPF.

With regard to some embodiments in the fourth aspect, in some embodiments of the present disclosure, the measurement method further includes: determining that the first node includes the UPF, and measuring the QoS data flow; and/or determining that the first node includes the access network device, and receiving the measurement result of the QoS data flow sent by the access network device.

With regard to some embodiments in the fourth aspect, in some embodiments of the present disclosure, the sending mode for the measurement result of the QoS data flow includes at least one of: sending, by the access network device, the measurement result of the QoS data flow to an AF via the SMF and a PCF; sending, by the access network device, the measurement result of the QoS data flow to the AF via the UPF, the SMF and the PCF; sending, by the access network device, the measurement result of the QoS data flow to the AF via the UPF; sending, by the UPF, the measurement result of the QoS data flow to the AF via the SMF and the PCF; or sending, by the UPF, the measurement result of the QoS data flow to the AF.

With regard to some embodiments in the fourth aspect, in some embodiments of the present disclosure, the measurement method further includes at least one of: sending the measurement result of the QoS data flow to the AF via the SMF and the PCF; or sending the measurement result of the QoS data flow to the AF.

With regard to some embodiments in the fourth aspect, in some embodiments of the present disclosure, the sending mode for the measurement result of the QoS data flow includes at least one of: sending, by the access network device, the measurement result of the QoS data flow to the AF via the SMF, the PCF and a NEF; sending, by the access network device, the measurement result of the QoS data flow to the AF via the UPF, the SMF and the PCF; sending, by the access network device, the measurement result of the QoS data flow to the AF via the UPF and the NEF; sending, by the UPF, the measurement result of the QoS data flow to the AF via the SMF, the PCF and the NEF; or sending, by the UPF, the measurement result of the QoS data flow to the AF via the NEF.

With regard to some embodiments in the fourth aspect, in some embodiments of the present disclosure, the measurement method further includes at least one of: sending the measurement result of the QoS data flow to the AF via the SMF, the PCF and the NEF; or sending the measurement result of the QoS data flow to the AF via the NEF.

In a fifth aspect, the present disclosure provides in some embodiments a measurement method, which is executed by an access network device, and includes: receiving a seventh message sent by an AMF, the seventh message is sent by the AMF based on a fourth message sent by an SMF, the fourth message includes a first message, the first message indicates a first node and/or a sending mode for a measurement result of a QoS data flow, and the first node is configured to measure the QoS data flow.

With regard to some embodiments in the fifth aspect, in some embodiments of the present disclosure, the first node includes at least one of: the access network device; or a UPF.

With regard to some embodiments in the fifth aspect, in some embodiments of the present disclosure, the measurement method further includes: determining that the first node includes the access network device; measuring the QoS data flow; and sending the measurement result of the QoS data flow to the UPF.

With regard to some embodiments in the fifth aspect, in some embodiments of the present disclosure, the sending mode for the measurement result of the QoS data flow includes at least one of: sending, by the access network device, the measurement result of the QoS data flow to an AF via the SMF and a PCF; sending, by the access network device, the measurement result of the QoS data flow to the AF via the UPF, the SMF and the PCF; sending, by the access network device, the measurement result of the QoS data flow to the AF via the UPF; sending, by the UPF, the measurement result of the QoS data flow to the AF via the SMF and the PCF; or sending, by the UPF, the measurement result of the QoS data flow to the AF.

With regard to some embodiments in the fifth aspect, in some embodiments of the present disclosure, the measurement method further includes at least one of: sending the measurement result of the QoS data flow to the AF via the SMF and the PCF; sending the measurement result of the QoS data flow to the AF via the UPF, the SMF and the PCF; or sending the measurement result of the QoS data flow to the AF via the UPF.

With regard to some embodiments in the fifth aspect, in some embodiments of the present disclosure, the sending mode for the measurement result of the QoS data flow includes at least one of: sending, by the access network device, the measurement result of the QoS data flow to the AF via the SMF, the PCF and a NEF; sending, by the access network device, the measurement result of the QoS data flow to the AF via the UPF, the SMF, the PCF and the NEF; sending, by the access network device, the measurement result of the QoS data flow to the AF via the UPF and the NEF; sending, by the UPF, the measurement result of the QoS data flow to the AF via the SMF, the PCF and the NEF; or sending, by the UPF, the measurement result of the QoS data flow to the AF via the NEF.

With regard to some embodiments in the fifth aspect, in some embodiments of the present disclosure, the measurement method further includes at least one of: sending the measurement result of the QoS data flow to the AF via the SMF, the PCF and the NEF; sending the measurement result of the QoS data flow to the AF via the UPF, the SMF, the PCF and the NEF; or sending the measurement result of the QoS data flow to the AF via the UPF and the NEF.

In a sixth aspect, the present disclosure provides in some embodiments a measurement method, which is executed by a terminal, and includes: sending a second message to an AF. The second message includes QoS requirement information, the second message indicates the AF to send a first message to a PCF, the first message indicates a first node and/or a sending mode for a measurement result of a QoS data flow, and the first node is configured to measure the QoS data flow.

With regard to some embodiments in the sixth aspect, in some embodiments of the present disclosure, the first node includes at least one of: an access network device; or a UPF.

With regard to some embodiments in the sixth aspect, in some embodiments of the present disclosure, the sending mode for the measurement result of the QoS data flow includes at least one of: sending, by the access network device, the measurement result of the QoS data flow to the AF via an SMF and the PCF; sending by the access network device, the measurement result of the QoS data flow to the AF via the UPF, the SMF and the PCF; sending, by the access network device, the measurement result of the QoS data flow to the AF via the UPF; sending, by the access network device, the measurement result of the QoS data flow to the AF via the SMF and the PCF; or sending, by the UPF, the measurement result of the QoS data flow to the AF.

With regard to some embodiments in the sixth aspect, in some embodiments of the present disclosure, the sending mode for the measurement result of the QoS data flow includes at least one of: sending, by the access network device, the measurement result of the QoS data flow to the AF via the SMF, the PCF and a NEF; sending, by the access network device, the measurement result of the QoS data flow to the AF via the UPF, the SMF, the PCF and the NEF; sending, by the access network device, the measurement result of the QoS data flow to the AF via the UPF and the NEF; sending, by the UPF, the measurement result of the QoS data flow to the AF via the SMF, the PCF and the NEF; or sending, by the UPF, the measurement result of the QoS data flow to the AF via the NEF.

In a seventh aspect, the present disclosure provides in some embodiments a measurement method, which is executed by a communication system. The communication system includes an AF, and the measurement method includes: sending, by the AF, a first message to a PCF, the first message indicates a first node and/or a sending mode for a measurement result of a QoS data flow, and the first node is configured to measure the QoS data flow.

In an eighth aspect, the present disclosure provides in some embodiments a measurement method, which is executed by a communication system. The communication system includes at least one of an AF, a PCF, an SMF, a UPF or an access network device, and the measurement method includes: sending, by the AF, a first message to the PCF, the first message indicating a first node and/or a sending mode for a measurement result of a QoS data flow; sending, by the PCF, a third message to the SMF based on the first message, the third message being used by the SMF to configure the first node for measuring the QoS data flow and/or the sending mode for the measurement result of the QoS data flow; configuring, by the SMF, the first node for measuring the QoS data flow and/or the sending mode for the measurement result of the QoS data flow based on the third message; receiving, by the UPF, a sixth message sent by the SMF, and updating session context information about the UPF based on the sixth message, the sixth message including the first message; and receiving, by the access network device, a seventh message sent by an AMF, the seventh message being sent by the AMF based on a fourth message sent by the SMF, and the fourth message including the first message.

In a ninth aspect, the present disclosure provides in some embodiments a first measurement apparatus, including: a sending module configured to send a first message to a PCF, the first message indicates a first node and/or a sending mode for a measurement result of a QoS data flow, and the first node is configured to measure the QoS data flow.

In a tenth aspect, the present disclosure provides in some embodiments a second measurement apparatus, including: a reception module configured to receive a first message sent by an AF, the first message indicating a first node and/or a sending mode for a measurement result of a QoS data flow, and the first node being configured to measure the QoS data flow; and a sending module configured to send a third message to an SMF based on the first message, the third message being used by the SMF to configure the first node for measuring the QoS data flow and/or the sending mode for the measurement data of the QoS flow.

In an eleventh aspect, the present disclosure provides in some embodiments a third measurement apparatus, including: a reception module configured to receive a third message sent by a PCF, the third message indicating a first node and/or a sending mode for a measurement result of a QoS data flow, and the first node being configured to measure the QoS data flow; and a configuration module configured to configure the first node for measuring the QoS data flow and/or the sending mode for the measurement result of the QoS data flow based on the third message.

In a twelfth aspect, the present disclosure provides in some embodiments a fourth measurement apparatus, including: a reception module configured to receive a sixth message sent by an SMF, the sixth message including a first message, the first message indicating a first node and/or a sending mode for a measurement result of a QoS data flow, and the first node being configured to measure the QoS data flow; and an updating module configured to update session context information about a UPF based on the sixth message.

In a thirteenth aspect, the present disclosure provides in some embodiments a fifth measurement apparatus, including: a reception module configured to receive a seventh message sent by an AMF. The seventh message is sent by the AMF based on a fourth message sent by an SMF, the fourth message includes a first message, the first message indicates a first node and/or a sending mode for a measurement result of a QoS data flow, and the first node is configured to measure the QoS data flow.

In a fourteenth aspect, the present disclosure provides in some embodiments a sixth measurement apparatus, including: a sending module configured to send a second message to an AF. The second message includes QoS requirement information, the second message indicates the AF to send a first message to a PCF, the first message indicates a first node and/or a sending mode for a measurement result of a QoS data flow, and the first node is configured to measure the QoS data flow.

In a fifteenth aspect, the present disclosure provides in some embodiments a communication device, including: one or more processors. The one or more processors are configured to call a computer instruction to enable the communication device to implement the measurement method in the first aspect, the second aspect, the third aspect, the fourth aspect, the fifth aspect, or the sixth aspect.

In a sixteenth aspect, the present disclosure provides in some embodiments a storage medium storing therein instructions. In a case that the instructions are executed by a communication device, the communication device implements the measurement method in the first aspect, the second aspect, the third aspect, the fourth aspect, the fifth aspect, or the sixth aspect.

In a seventeenth aspect, the present disclosure provides in some embodiments a program product. In a case that the program product is executed by a communication device, the communication device implements the measurement method in the first aspect, the second aspect, the third aspect, the fourth aspect, the fifth aspect, or the sixth aspect.

In an eighteenth aspect, the present disclosure provides in some embodiments a communication system, including an AF. The AF is configured to implement the measurement method in the first aspect.

In a nineteenth aspect, the present disclosure provides in some embodiments a communication system, including at least one of an AF, a PCF, an SMF, a UPC, an access network device or a terminal. The AF is configured to implement the measurement method in the first aspect, the PCF is configured to implement the measurement method in the second aspect, the SMF is configured to implement the measurement method in the third aspect, the UPF is configured to implement the measurement method in the fourth aspect, the access network device is configured to implement the measurement method in the fifth aspect, and the terminal is configured to implement the measurement method in the sixth aspect.

It should be appreciated that the first measurement apparatus, the second measurement apparatus, the third measurement apparatus, the fourth measurement apparatus, the fifth measurement apparatus, the sixth measurement apparatus, the communication device, the communication system, the storage medium and the computer program product are all used to implement the measurement methods provided in the embodiments of the present disclosure, so the beneficial effects achieved by them may refer to those of the corresponding measurement method, which will not be particularly defined herein.

The present disclosure provides in some embodiments the measurement method, the measurement apparatus, the communication device, the communication system and the storage medium. In some embodiments of the present disclosure, the measurement method may be mutually replaced with such a term as information processing method or communication method, the measurement apparatus may be mutually replaced with such a term as information processing apparatus or communication apparatus, and the measurement system may be mutually replaced with information processing system or communication system.

The embodiments of the present disclosure are merely illustrative, rather than exhaustive, embodiments, and shall not be construed as limiting the protection scope of the present disclosure. In a case of no conflict, each step in one embodiment may be implemented as an independent embodiment, and the steps may be combined randomly. For example, a scheme in one embodiment obtained after removing part of steps may also be implemented as an independent embodiment. In addition, an order of the steps in one embodiment may be changed. Optional implementations in one embodiment may be combined randomly. Moreover, the embodiments may be combined randomly, e.g., part of, or all of, the steps in different embodiments may be combined randomly, and optional implementations in one embodiment may be combined randomly with those in the other embodiments.

In the embodiments of the present disclosure, in a case that there is no specific definition and logical conflict, the terms and/or descriptions in the embodiments have consistency, and may mutually refer to each other. Technical features in different embodiments may be combined to form a new embodiment based on an inherent logical relationship.

The terms used in the embodiments of the present disclosure are merely used to describe specific embodiments, but shall not be construed as limiting the present disclosure.

In the embodiments of the present disclosure, unless otherwise defined, an element in a singular form, e.g., "a/an", "the", "the aforesaid" or "this", indicates that there is one and merely one element, or there is one or more elements or at least one element. For example, in a case that a noun is defined with an article "a", "an" or "the", the noun after the article may be understood as in the singular form or a plural form.

In the embodiments of the present disclosure, "a plurality of" refers to two or more than two.

In some embodiments of the present disclosure, the expressions "at least one of", "one or more", "a plurality of" and "multiple" may be replaced with each other, In some embodiments of the present disclosure, depending on the conditions, the expression "at least one of A or B", "A and/or B", "A in one condition, and B in another condition" and "A in response to one condition, and B in response to another condition" may include: A in some embodiments (A is performed regardless of B); B in some embodiments (B is performed regardless of A); one of A and B is performed selectively in some embodiments (one of A and B is selectively performed); and A and B are both performed in some embodiments (A and B are both performed). The same is also applied in a case that there are A, B, C, ....

In some embodiments of the present disclosure, depending on the conditions, the expression "A or B" includes: A in some embodiments (A is performed regardless of B); B in some embodiments (B is performed regardless of A); and one of A and B is performed selectively in some embodiments (one of A and B is selectively performed). The same is also applied in a case that there are A, B, C, ....

In the embodiments of the present disclosure, the terms such as "first" and "second" are only used for distinguishing objects from each other, but shall not be construed as limiting a position, an order, a priority level, the quantity or content of each object. The description about the object may refer to that in the appended claims or the context in the embodiments, and a superfluous limitation is not caused due to the use of these terms. For example, in a case that the object is "field", in the terms "first field" and "second field", the words "first" and "second" are not used to limit positions or an order of the fields, i.e., the words "first" and "second" are not used to limit whether the fields are located in the same message, or an order of the first field and the second field. For another example, in a case that the object is "level", in the terms "first level" and "second level", the words "first" and "second" are not used to limit priorities of the levels. In addition, the quantity of objects is not limited by the ordinal numeral, and the quantity may be one or more. Taking "first apparatus" as an example, the quantity of apparatuses may be one or more. Moreover, the objects defined by different ordinal numerals may be the same or different. For example, in a case that the object is "apparatus", "first apparatus" and "second apparatus" may refer to the same apparatus or different apparatuses, and types of the apparatuses may be the same or different. For another example, in a case that the object is "information", "first information" and "second information" may refer to same information or different information, and contents of the information may be the same or different.

In some embodiments of the present disclosure, the expressions "including A", "containing A", "for indicating A" and "carrying A" may be interpreted as directly carrying A, or indirectly indicating A".

In some embodiments of the present disclosure, the expressions "in response to ...", "in response to determining ...", "in a case that ...", and "if ..." may be replaced with each other.

In some embodiments of the present disclosure, the expressions "greater than", "greater than or equal to", "not less than" and "or more" may be replaced with each other, and the expressions "less than", "less than or equal to", "not greater than" and "or less" may be replaced with each other.

In some embodiments of the present disclosure, the apparatus may be a physical or virtual one, and its name is not limited to those recorded in the embodiments. The terms "apparatus", "equipment", "device", "circuit", "network element", "node", "function", "unit", "section", "system", "network", "chip", "chip system", "entity" and "body" may be replaced with each other.

In some embodiments of the present disclosure, the term "network" may be interpreted as an apparatus included in a network (e.g., access network device or core network device).

In some embodiments of the present disclosure, the terms "access network device (AN device)", "radio access network device (RAN device)", "base station (BS)", "radio base station", "fixed station", "node", "access point", "transmission point (TP)", "reception point (RP)", "transmission/reception point (TRP)", "panel", "antenna panel", "antenna array", "cell", "macro cell", "small cell", "femto cell", "pico cell", "sector", "cell group", "serving cell", "carrier", "component carrier" and "bandwidth part" may be replaced with each other.

In some embodiments of the present disclosure, the terms "terminal", "terminal device", "user equipment (UE)", "user terminal", "mobile station (MS)", "mobile terminal (MT)", "subscriber station", "mobile unit", "subscriber unit", "wireless unit", "remote unit", "mobile device", "wireless device", "wireless communication device", "remote device", "mobile subscriber station", "access terminal", "mobile terminal", "wireless terminal", "remote terminal", "handset", "user agent", "mobile client" and "client" may be replaced with each other.

In some embodiments of the present disclosure, an access network device, a core network device or a network device may be replaced with a terminal. For example, the embodiments of the present disclosure may also be applied to a structure in which communication between the access network device, the core network device or the network device and the terminal is substituted with communication among a plurality of terminals (e.g., also called as device-to-device (D2D) or vehicle-to-everything (V2X)). In this case, this structure is also a structure in which the terminal has all of, or part of, functions of the access network device. In addition, the terms "uplink" and "downlink" may also be replaced with terms corresponding to the communication among the terminals (e.g., sidelink). For example, an uplink channel and a downlink channel may be replaced with sidelink channel, and an uplink and a downlink may be replaced with sidelink.

In some embodiments of the present disclosure, a terminal may be replaced with an access network device, a core network device or a network device. In this case, the access network device, the core network device or the network device has all of, or part of, the functions of the terminal.

In some embodiments of the present disclosure, the collection of data and information needs to comply with relevant laws and regulations of relevant countries.

In some embodiments of the present disclosure, the collection of data and information needs to be authorized by a user.

In addition, each element, row or column in a table in the embodiments of the present disclosure may be implemented as an independent embodiment, and any combination of the elements, rows or columns may also be implemented as an independent embodiment.

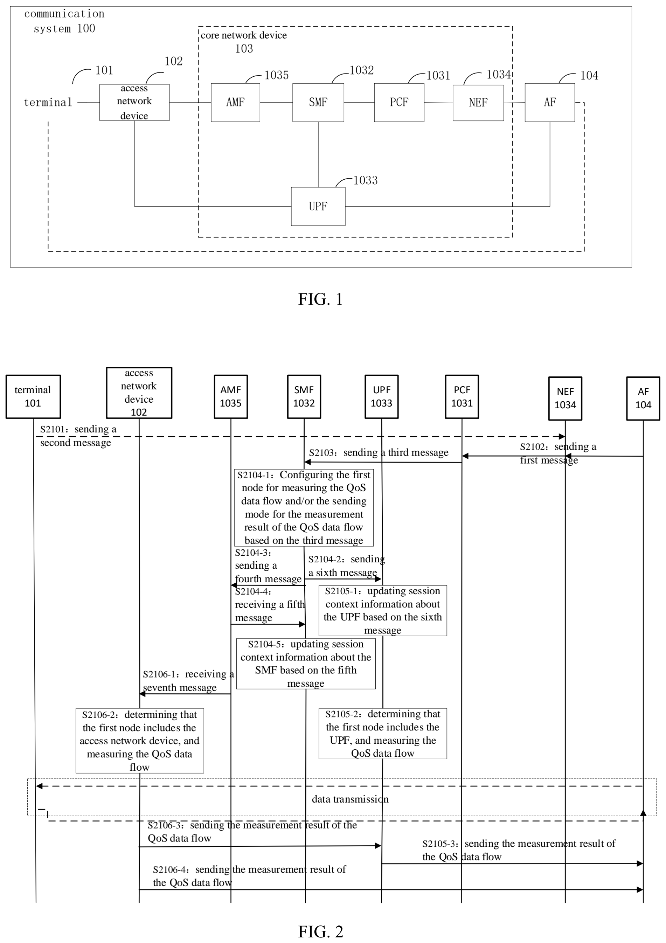

FIG. 1 is a schematic view showing an architecture of a communication system according to an embodiment of the present disclosure. As shown in FIG. 1, the communication system 100 includes a terminal 101, an access network device 102, a core network device 103, and an AF 104.

In some embodiments of the present disclosure, the terminal 101 includes, but not limited to, at least one of a mobile phone, a wearable device, an Internet of Things device, a vehicle having a communication function, a smart vehicle, a pad, a computer having a wireless transmission and reception function, a VR terminal device, an AR terminal device, a wireless terminal device in industrial control, a wireless terminal device in self-driving, a wireless terminal device in remote medical surgery, a wireless terminal device in smart grid, a wireless terminal device in transportation safety, a wireless terminal device in smart city, or a wireless terminal device in smart home.

In some embodiments of the present disclosure, the access network device 102 is a node or device via which a terminal accesses a wireless network, and the access network device includes, but not limited to, at least one of an evolved NodeB (eNB) in a 5^{th}-generation (5G) communication system, a next generation eNB (ng-eNB), a next generation NodeB (gNB), node B (NB), home node B (HNB), home evolved nodeB (HeNB), a wireless backhaul device, a radio network controller (RNC), a base station controller (BSC), a base transceiver station (BTS), a base band unit (BBU), a mobile switching center, a base station, in a 6^{th}-generation (6G) communication system, an Open RAN, a cloud RAN, a base station in the other communication systems, or an access node in a Wireless Fidelity (Wi-Fi) system.

In some embodiments of the present disclosure, the technical solution of the present disclosure may be applied to Open RAN architecture. At this time, interfaces between the access network devices or inside the access network device involved in the embodiments of the present disclosure may be changed into internal interfaces of the Open RAN, and a process and information interaction between the internal interfaces may be achieved via software or a program.

In some embodiments of the present disclosure, the access network device consists of a central unit (CU) and a distributed unit (DU). The CU is also called as control unit. Through the user of a CU-DU structure, a protocol layer of the access network device is divided into multiple protocol layers, functions of part of the protocol layers are controlled by the CU, functions of part of, or all of, the remaining protocol layers are distributed in the DUs, and the DUs are controlled by the CU. However, the present disclosure is not limited thereto.

In some embodiments of the present disclosure, the core network device 103 includes a plurality of functions, entities or network elements. Illustratively, the core network device 103 includes at least one of a PCF 1031, an SMF 1032, a UPF 1033, a NEF 1034, or an AMF 1035. It should be appreciated that specific functions, connection relationships and implementation modes of the AF, the PCF, the SMF, the UPF, the NEF and the AMF may refer to relevant description in the related art (e.g., a 3^{rd} generation partnership projection (3GPP) protocol), and thus will not be particularly defined herein.

In some embodiments of the present disclosure, the PCF 1031 is used for policy control, a name thereof is not limited thereto, and it may be any other network element having a similar function.

In some embodiments of the present disclosure, the SMF 1032 is used for session management, a name thereof is not limited thereto, and it may be any other network element having a similar function.

In some embodiments of the present disclosure, the UPF 1033 is used for user plane control, a name thereof is not limited thereto, and it may be any other network element having a similar function.

In some embodiments of the present disclosure, the NEF 1034 is used for network exposure function, a name thereof is not limited thereto, and it may be any other network element having a similar function.

In some embodiments of the present disclosure, the AMF 1035 is used for access and mobility management, a name thereof is not limited thereto, and it may be any other network element having a similar function.

The AF sends a measurement indication (e.g., for indicating the RAN, the UPF, or both the RAN and UPF to measure QoS information) to a 5G core network (NEF/PCF) and/or a QoS information exposure indication. The AF provides the measurement indication and/or the QoS information indication to the NEF/PCF in an AF QoS request process. It should be appreciated that the measurement indication is used to indicate a first node for measuring a QoS data flow. Illustratively, the measurement indication is used to indicate (e.g., a network function(NF)) to measure the QoS information (e.g., the RAN, the UPF, or both the RAN and the UPF). The QoS information exposure indication is used to indicate a sending mode for a measurement result of the QoS data flow. Illustratively, the QoS information exposure indication is used to indicate how to send the measurement result to a target NF: the RAN sends the measurement result to the AF via the SMF and the PCF; the RAN sends the measurement result to the AF via the UPF, the SMF and the PCF; the RAN sends the measurement result to the AF via the UPF; the UPF sends the measurement result to the AF via the SMF and the PCF; the UPF directly sends the measurement result to the AF; the RAN sends the measurement result to the AF via the SMF, the PCF and the NEF; the RAN sends the measurement result to the AF via the UPF, the SMF, the PCF and the NEF; the RAN sends the measurement result to the AF via the UPF and the NEF; the UPF sends the measurement result to the AF via the SMF, the PCF and the NEF; and the UPF sends the measurement result to the AF via the NEF. Optionally, the QoS information exposure indication also indicates a NF (e.g., the RAN or the UPF) for sending the measurement result, and how to send the measurement result to the AF: sending the measurement result to the AF via the SMF and the PCF or sending the measurement result to the AF via the SMF, the PCF and the NEF; sending the measurement result to the AF via the UPF, the SMF and the PCF, or sending the measurement result to the AF via the UPF, the SMF, the PCF and the NEF; and directly sending the measurement result to the AF, or sending the measurement result to the AF via the NEF. The measurement indication is also called as first indication information, and the QoS information exposure indication is also called as second indication information.

The PCF determines a policy and charging control (PCC) rule based on the measurement indication and/or the QoS information exposure indication, and sends the measurement indication and/or the QoS information exposure indication to the SMF using the PCC rule. The PCF determines the measurement indication and/or the QoS information exposure indication based on a rule provided by the AF/NEF and/or an operator's policy (e.g., local or operations, administration and maintenance (OAM) configuration), which covers a scenario where the AF does not send the measurement indication and/or the QoS information exposure indication.

Upon the reception of the PCC rule, the SMF configures the UPF and/or the RAN to perform QoS monitoring (measurement) on the QoS data flow (or all QoS data flows of a session), and sends a monitoring result (the measurement result) based on relevant parameters (a QoS parameter to be measured, a reporting period, a reporting frequency, and the QoS information exposure indication). The SMF determines that the UPF and/or the RAN performs the measurement and monitoring based on the measurement indication, and determines a sending mode for the monitoring result based on the QoS information exposure indication. The SMF determines the measurement indication and/or the QoS information exposure indication based on a rule provided by the PCF and/or the operator's policy (e.g., local or OAM configuration), which covers a scenario where the AF does not send the measurement indication and/or the QoS information exposure indication.

The UPF monitors the QoS data flow, and sends the monitoring result (the measurement result) which is determined based on the relevant parameters (e.g., the QoS parameter to be measured, the reporting period, the reporting frequency, and the QoS information exposure indication). In a case that the RAN performs the measurement and disclosure from the UPF, the UPF monitors/receives the measurement result from the RAN, and forwards it to the AF. The UPF performs the disclosure based on the QoS information exposure indication, e.g., the UPF sends the measurement result to the AF via the SMF and the PCF; the UPF directly sends the measurement result to the AF; the UPF sends the measurement result to the AF via the SMF, the PCF and the NEF; or the UPF sends the measurement result to the AF via the NEF.

The RAN performs the monitoring on the QoS data flow (or all QoS data flows of a session), and sends the monitoring result (the measurement result) which is determined based on the relevant parameters (e.g., the QoS parameter to be measured, the reporting period, the reporting frequency, and the QoS information exposure indication). The RAN performs the disclosure based on the QoS information exposure indication, e.g., sending the measurement result to the AF via the SMF and the PCF; sending the measurement result to the AF via the UPF, the SMF and the PCF; sending the measurement result to the AF via the UPF; sending the measurement result to the AF via the SMF, the PCF and the NEF; sending the measurement result to the AF via the UPF, the SMF, the PCF and the NEF; or sending the measurement result to the AF via the UPF and the NEF. Relevant QoS information for which QoS monitoring is requested includes at least one of: congestion information, QoS notification control, data rate information, round trip latency, or 5G QoS identifier (5QI) estimated bandwidth.

It should be appreciated that the communication system described in the embodiments of the present disclosure is used to describe the technical solutions of the present disclosure in a clearer manner, but shall not be construed as limiting the technical solutions provided in the embodiments of the present disclosure. As is known in the art, along with the evolution of the system architecture as well as the emergence of new service scenarios, the technical solutions are also applicable to similar technical problems.

The following embodiments of the present disclosure may be applied to, but not limited to, the communication system 100 in FIG. 1, or part of components of the communication system 100. The components in FIG. 1 are for illustrative purposes, and the communication system may include all or part of the components in FIG. 1, and the other components not shown in FIG. 1. The quantity of components and the forms of the components may be random, and the components may be physical or virtual ones. A connection relationship among the components is for illustratively purposes only, and the components may be or may not be coupled to each other, the connection may be in any form, e.g., direct connection or indirect connection, wired connection or wireless connection.

The embodiments of the present disclosure may be applied to Long Term Evolution (LTE), LTE-Advanced (LTE-A), LTE-Beyond (LTE-B), SUPER 3G, IMT-Advanced, 4^{th} generation mobile communication system (4G), 5^{th} generation mobile communication system (5G), 5G new ratio (NR), future ratio access (FRA), new-radio access technology (RAT), new radio (NR), new radio access (NX), future generation radio access (FX), global system for mobile communications (GSM (registered trademark)), CDMA2000, ultra mobile broadband (UMB), IEEE 802.11 (Wi-Fi (registered trademark)), IEEE 802.16 (WiMAX (registered trademark)), IEEE 802.20, ultra-wideband (UWB), Bluetooth (registered trademark), public land mobile network (PLMN), device-to-device (D2D) system, machine to machine (M2M) system, Internet of Things (IoT) system, vehicle-to-everything (V2X), a system using the other communication method, or a next system extended based on these systems. In addition, a plurality of systems may also be used in combination(e.g., a combination of LTE or LTE-A and 5G).

In some embodiments of the present disclosure, for an XRM service and an interactive media service, a 5^{th} generation system (5GS) needs to take a data flow QoS characteristic of the service into consideration, e.g., whether parameters, e.g., delay critical Guaranteed Bit Rate (GBR), Guaranteed Frame Bit Rate (GFBR), Packet Delay Budget (PDB) or Default Maximum Data Burst Volume (MDBV), are satisfied simultaneously and coordinated. For a plurality of XRM data flows for one UE and XRM data flows for a plurality of UEs, consistency in QoS authorization and execution needs to be guaranteed.

In some embodiments of the present disclosure, the 5GS system and the XR/media services cooperate to achieve the opening of information or capability to an external network, so as to provide better user experience. The 5GS provides QoS flow-based congestion information QoS notification control, data rate information, round trip latency, and 5QI estimated bandwidth to the AF.

In some embodiments of the present disclosure, the measurement of the disclosure information includes at least one of: measurement performed by a Packet Forwarding Engine for Service-based Architecture (PSA) UPF; measurement performed by the RAN; or measurement performed by both the RAN and the UPF.

In some embodiments of the present disclosure, the sending mode for the disclosure information includes at least one of: sending, by the PSA UPF, the disclosure information to the AF via Nupf_EventExposure (directly sending the disclosure information to the AF via the UPF, or sending the disclosure information to the AF via the NEF, e.g., a user plane); or sending, by the PSA UPF, the disclosure information to the AF via the SMF, the PCF and the NEF (sending the disclosure information to the AF via a control plane); or sending, by the RAN, the disclosure information to the AF via the SMF, the PCF and the NEF (sending the disclosure information to the AF via the control plane, directly sending by the RAN the disclosure information to the SMF, or sending the disclosure information to the SMF via the UPF).

In some embodiments of the present disclosure, for different measurement modes, e.g., the measurement through the RAN or the measurement through the UPF, the demands in a corresponding scenario and effects thereof are different, and for different sending modes, user perception improvement effects of different monitoring information are difference. In addition, direct association relationships between the measurement modes and the sending modes are different.

In some embodiments of the present disclosure, the disclosure information is also called as the measurement result of the QoS data flow.

FIG. 2 is a schematic view showing an interaction of a measurement method according to an embodiment of the present disclosure. As shown in FIG. 2, the measurement method involved in the embodiments of the present disclosure is executed by the communication system 100. The measurement method includes the following steps.

**Step S2101:** a terminal sends a second message to an AF.

The second message includes QoS requirement information, the second message indicates the AF to send a first message to a PCF, the first message indicates a first node and/or a sending mode for a measurement result of a QoS data flow, and the first node is configured to measure the QoS data flow.

It should be appreciated that sending, by the terminal, the second message to the AF is optional. Illustratively, the terminal may not send the second message to the AF.

Optionally, the first node is also called as a measurement node.

Optionally, the second message is a non-3GPP message.

In an embodiment of the present disclosure, the second message is a Hypertext Transfer Protocol (HTTP) application layer protocol message, or an Application Programming Interface (API) message.

Illustratively, the QoS requirement information includes at least one of service type, service level, limitations of bandwidth and data rate, delay requirement, reliability requirement, security requirement, traffic type, or service duration. A person skilled in the art may also determine the QoS requirement information based on the practical need, which will not be particularly defined herein.

In some embodiments of the present disclosure, the QoS data flow includes one QoS data flow in a session, or all QoS data flows in the session.

In some embodiments of the present disclosure, QoS information for measuring the QoS data flow includes at least one of congestion information, QoS notification control, data rate information, round trip latency, or 5QI estimated bandwidth.

In some embodiments of the present disclosure, the first node includes at least one of: an access network device; or a UPF.

Optionally, the first message indicates the access network device to independently measure the QoS data flow.

Optionally, the first message indicates the UPF to independently measure the QoS data flow.

Optionally, the first message indicates the access network device and the UPF to measure the QoS data flow.

In some embodiments of the present disclosure, the sending mode for the measurement result of the QoS data flow includes at least one of: sending, by the access network device, the measurement result of the QoS data flow to the AF via an SMF and the PCF; sending, by the access network device, the measurement result of the QoS data flow to the AF via the UPF, the SMF and the PCF; sending, by the access network device, the measurement result of the QoS data flow to the AF via the UPF; sending, by the UPF, the measurement result of the QoS data flow to the AF via the SMF and the PCF; sending, by the UPF, the measurement result of the QoS data flow to the AF; sending, by the access network device, the measurement result of the QoS data flow to the AF via the SMF, the PCF and a NEF; sending, by the access network device, the measurement result of the QoS data flow to the AF via the UPF, the SMF, the PCF and the NEF; sending, by the access network device, the measurement result of the QoS data flow to the AF via the UPF and the NEF; sending, by the UPF, the measurement result of the QoS data flow to the AF via the SMF, the PCF and NEF; or sending, by the UPF, the measurement result of the QoS data flow to the AF via the NEF.

Optionally, the sending mode for the measurement result of the QoS data flow includes at least one of: sending, by the access network device, the measurement result of the QoS data flow to the AF via the SMF and the PCF; sending, by the access network device, the measurement result of the QoS data flow to the AF via the UPF, the SMF and the PCF; sending, by the access network device, the measurement result of the QoS data flow to the AF via the UPF; sending, by the UPF, the measurement result of the QoS data flow to the AF via the SMF and the PCF; or sending, by the UPF, the measurement result of the QoS data flow to the AF.

Optionally, there is at least one measurement result of the QoS data flow, the access network device sends the at least one measurement result of the QoS data flow to the SMF, the SMF sends the at least one measurement result of the QoS data flow to the PCF, and the PCF generates an AF subscription demand based on the at least one measurement result of the QoS data flow and sends the AF subscription demand to the AF.

Optionally, there is one or more measurement results of the QoS data flow, the access network device sends the one or more measurement results of the QoS data flow to the UPF, the UPF sends the one or more measurement results of the QoS data flow to the SMF, the SMF sends the one or more measurement results of the QoS data flow to the PCF, and the PCF generates an AF subscription demand based on the one or more measurement results of the QoS data flow and sends the AF subscription demand to the AF.

Optionally, there is at least one measurement result of the QoS data flow, the UPF sends the at least one measurement result of the QoS data flow to the SMF, the SMF sends the at least one measurement result of the QoS data flow to the PCF, and the PCF generates an AF subscription demand based on the at least one measurement result of the QoS data flow and sends the AF subscription demand to the AF.

Optionally, the sending mode for the measurement result of the QoS data flow includes at least one of: sending, by the access network device, the measurement result of the QoS data flow to the AF via the SMF, the PCF and the NEF; sending, by the access network device, the measurement result of the QoS data flow to the AF via the UPF, the SMF, the PCF and the NEF; sending, by the access network device, the measurement result of the QoS data flow to the AF via the UPF and the NEF; sending, by the UPF, the measurement result of the QoS data flow to the AF via the SMF, the PCF and the NEF; or sending, by the UPF, the measurement result of the QoS data flow to the AF via the NEF.

Optionally, there is at least one measurement result of the QoS data flow, the SMF sends the at least one measurement result of the QoS data flow to the PCF, the PCF generates an AF subscription demand based on the at least one measurement result of the QoS data flow and sends the AF subscription demand to the NEF, and the NEF sends the AF subscription demand to the AF.

Optionally, the SMF sends the measurement result of the QoS data flow to the PCF, and the PCF generates an AF subscription demands based on the measurement results of a plurality of associated QoS data flows and sends the AF subscription demand to the AF.

Illustratively, with respect to a Round Trip (RT) latency scenario, the calculation is performed based on the measurement results of a plurality of associated QoS data flows.

It should be appreciated that the above-mentioned method for generating, by the PCF, the AF subscription demand is applied to a scenario where the access network device measures the QoS data flow, and a scenario where the access network device and the UPF measure the QoS data flow simultaneously, which will not be particularly defined herein.

In some embodiments of the present disclosure, the first message includes first indication information and second indication information, the first indication information indicates the first node for measuring the QoS data flow, and the second indication information indicates the sending mode for the measurement result of the QoS data flow.

In some embodiments of the present disclosure, the terminal sends the first indication information to the AF.

In some embodiments of the present disclosure, the terminal sends the second indication information to the AF.

In some embodiments of the present disclosure, the terminal sends the first indication information and the second indication information to the AF.

**Step S2102:** the AF sends the first message to the PCF.

In some embodiments of the present disclosure, the AF receives a second message sent by the terminal, and sends the first message to the PCF based on the second message.

Optionally, the AF is a trusted AF, and the AF sends the first message to the PCF.

It should be appreciated that the trusted AF is an AF which has already been authenticated and authorized.

In some embodiments of the present disclosure, the AF sends the first message to the PCF via the NEF.

Illustratively, the AF sends the first message to the NEF, and upon the receipt of the first message, the NEF sends the first message to the PCF.

Optionally, the AF is an untrusted AF, and the AF sends the first message to the PCF via the NEF.

It should be appreciated that the untrusted AF is an AF which has not been authenticated and authorized yet, or an AF which has already been authenticated and which belongs to a third party.

In some embodiments of the present disclosure, the AF sends an AF session establishment request to the PCF, and the AF session establishment request includes the first message.

Illustratively, the AF sends the AF session establishment request to the PCF via Nnef_AFsessionWithQoS_Create.

Optionally, the AF is a trusted AF, and the AF sends the AF session establishment request to the PCF.

In some embodiments of the present disclosure, the AF sends the AF session establishment request to the PCF via the NEF, and the AF session establishment request includes the first message.

Illustratively, the AF sends the AF session establishment request to the NEF, and upon the receipt of the AF session establishment request, the NEF sends the AF session establishment request to the PCF.

Optionally, the AF is an untrusted AF, and the AF sends the AF session establishment request to the PCF via the NEF.

Illustratively, the AF sends the AF session establishment request to the NEF via Nnef_AFsessionWithQoS_Create.

In some embodiments of the present disclosure, the AF session establishment request further includes XRM service information, e.g., an identifier of a data flow or a data flow group of an XRM service (e.g., multi-modal service Identifier (ID)), a UE address/UE identifier, an AF application ID, flow description, Data Network Name (DNN), Single Network Slice Selection Assistance Information (S-NSSAI), or a QoS parameter. The multi-modal service ID is used to identify all data flows in an XRM service group.

Optionally, after the AF sends the AF session establishment request to the NEF, the NEF performs relevant mapping.

The relevant mapping includes mapping from the XRM service to the DNN and the S-NSSAI, and the XRM service includes an AF service identifier. The relevant mapping also includes mapping from an external application to a Core Network (CN) application ID, and mapping from an external UE ID to a UE ID in CN based on Unified Data Management (UDM) subscription information, e.g., Subscription Permanent Identifier (SUPI). In addition, the relevant mapping further includes mapping of an XRM service group ID from outside to inside based on the UDM subscription information.

Optionally, the NEF authorizes an AF request based on the first message sent by the AF, and determines whether to trigger a Time Sensitive Communication Traffic Steering Function (TSCTSF) or directly establish a connection with the PCF, and the PCF receives an attribute provided by the AF from the NEF or the TSCTSF.

It should be appreciated that a signaling step in the above processing is the same as a signaling step for setting an AF session of a QoS program in a 3GPP protocol, and thus will not be particularly defined herein.

**Step S2103:** the PCF sends a third message to the SMF based on the first message.

The third message is used by the SMF to configure the first node for measuring the QoS data flow and/or the sending mode for the measurement result of the QoS data flow.

Optionally, the third message includes the first message.

Optionally, the third message is a message determined based on the first message.

Illustratively, the PCF sends the third message to the SMF via a SM Policy Association Modification Request.

In some embodiments of the present disclosure, the PCF receives the first message sent by the AF.

Optionally, the AF is a trusted AF, and the PCF receives the first message sent by the AF.

In some embodiments of the present disclosure, the PCF receives the first message sent by the AF via the NEF.

Optionally, the AF is an untrusted AF, and the PCF receives the first message sent by the AF via the NEF.

In some embodiments of the present disclosure, upon the receipt of the first message sent by the AF, the PCF determines updated policy information or new policy information to be sent to the SMF.

Optionally, the PCF determines a PCC rule based on the first message, and sends the PCC rule to the SMF.

In some embodiments of the present disclosure, the PCF determines the PCC rule based on the first message and/or an operator's policy.

The operator's policy is a local or OAM configuration.

Optionally, upon the receipt of the first message, the PCF determines the PCC rule based on the service type as well as the first message and/or the operator's policy.

**Step S2104-1:** the SMF configures the first node for measuring the QoS data flow and/or the sending mode for the measurement result of the QoS data flow based on the third message.

In some embodiments of the present disclosure, upon the receipt of the third message sent by the PCF, the SMF configures the first node as the access network device and/or the UPF based on the first indication information in the first message, and configures the sending mode for the measurement result of the QoS data flow based on the second indication information in the first message.

In some embodiments of the present disclosure, the SMF determines the first node for measuring the QoS data flow and/or the sending mode for the measurement result of the QoS data flow based on the PCC rule and/or the operator's policy sent by the PCF, and configures measurement information for measuring the QoS data flow based on the first node and/or the measurement result of the QoS data flow.

In some embodiments of the present disclosure, upon the receipt of the third message sent by the PCF, the SMF sends a response message with respect to the third message to the PCF.

Illustratively, the SMF sends a SM Policy Association Modification Response to the PCF, so as to respond to the third message.

**Step S2104-2:** the SMF sends a sixth message to the UPF.

The sixth message indicates to update session context information about the UPF, and the sixth message includes the first message.

Illustratively, the SMF sends the sixth message to the UPF via a N4 Session Modification Request.

In some embodiments of the present disclosure, the SMF receives a response message sent by the UPF with respect to the sixth message.

Illustratively, the SMF receives a response message sent by the UPF with respect to the sixth message via a N4 Session Modification Response.

Optionally, the UPF updates the session context information about the UPF based on the sixth message.

**Step S2104-3:** the SMF sends a fourth message to the AMF.

The fourth message includes the first message.

Optionally, the fourth message is used to request the AMF to update a Protocol Data Unit (PDU) session based on the first message.

Illustratively, the SMF sends the fourth message to the AMF via a Namf_Communication_N1N2MessageTransfer.

Optionally, upon the receipt of the fourth message sent by the SMF, the AMF sends a seventh message to the access network device, and the seventh message includes the first message.

Optionally, after sending the seventh message to the access network device, the AMF receives a response message sent by the access network device with respect to the seventh message.

**Step S2104-4:** the SMF receives a fifth message sent by the AMF.

In some embodiments of the present disclosure, the AMF sends the fifth message to the SMF.

Optionally, the fifth message is used to send N2 session management information received by the AMF from the access network device.

Illustratively, the AMF sends the fifth message to the SMF via a Nsmf_PDUSession _UpdateSMContext Request.

**Step S2104-5:** the SMF updates session context information about the SMF based on the fifth message.

Illustratively, the SMF sends a response message to the AMF with respect to the fifth message via a Nsmf_PDUSession_UpdateSMContext Response.

**Step S2105-1:** the UPF updates session context information about the UPF based on the sixth message.

In some embodiments of the present disclosure, after updating the session context information about the UPF based on the sixth message, the UPF sends a response message with respect to the sixth message to the SMF.

It should be appreciated that, after the UPF updates the session context information about the UPF based on the sixth message, it means that the PDU session establishment is completed, and the QoS measurement-related configuration is completed.

**Step S2105-2:** the UPF determines that the first node includes the UPF and measures the QoS data flow.

Optionally, the first node is determined as the UPF, and the UPF measures the QoS data flow.

In some embodiments of the present disclosure, the UPF determines that the first node includes the access network device, and receives the measurement result of the QoS data flow sent by the access network device.

Optionally, the first node is determined as the UPF and the access network device, the UPF and the access network device measure the QoS data flow, and the UPF receives the measurement result of the QoS data flow sent by the access network device.

**Step S2105-3:** the UPF sends the measurement result of the QoS data flow to the AF.

In some embodiments of the present disclosure, the UPF sends the measurement result of the QoS data flow to the AF via the SMF and the PCF.

In some embodiments of the present disclosure, the UPF directly sends the measurement result of the QoS data flow to the AF.

In some embodiments of the present disclosure, the UPF directly sends part of measurement results of the QoS data flow to the AF, and sends the other part of the measurement results of the QoS data flow to the AF via the SMF and the PCF.

In some embodiments of the present disclosure, the UPF receives the measurement result of the QoS data flow sent by the access network device, and sends the measurement result of the QoS data flow to the AF via the SMF and the PCF.

In some embodiments of the present disclosure, the UPF receives the measurement result of the QoS data flow sent by the access network device, and directly sends the measurement result of the QoS data flow to the AF.

In some embodiments of the present disclosure, the UPF sends the measurement result of the QoS data flow to the AF via the SMF, the PCF and the NEF.

In some embodiments of the present disclosure, the UPF sends the measurement result of the QoS data flow to the AF via the NEF.

In some embodiments of the present disclosure, the UPF sends part of the measurement results of the QoS data flow to the AF via the NEF, and sends the other part of the measurement results of the QoS data flow to the AF via the SMF, the PCF and the NEF.

In some embodiments of the present disclosure, the UPF receives the measurement result of the QoS data flow sent by the access network device, and sends the measurement result of the QoS data flow to the AF via the SMF, the PCF and the NEF.

In some embodiments of the present disclosure, the UPF receives the measurement result of the QoS data flow sent by the access network device, and sends the measurement result of the QoS data flow to the AF via the NEF.

In some embodiments of the present disclosure, the UPF sends the measurement result of the QoS data flow based on a QoS parameter to be measured, a reporting period, a reporting frequency, and the second indication information in the first message.

**Step 2106-1:** the access network device receives a seventh message sent by the AMF.

The seventh message is sent by the AMF based on the fourth message sent by the SMF, the seventh message includes the first message, and the first message indicates the first node for measuring the QoS data flow and/or the sending mode for the measurement result of the QoS data flow.

In some embodiments of the present disclosure, after the AMF sends the fourth message to the AMF, the AMF sends the seventh message to the access network device based on the fourth message, and the access network device sends a response message with respect to the seventh message to the AMF.

Illustratively, the AMF sends the seventh message to the access network device via a N2 message.

Optionally, upon the receipt of the seventh message sent by the AMF, the access network device determines a PDU session request, and sends a N2 session management message to the AMF.

**Step 2106-2:** the access network device determines that the first node includes the access network device, and measures the QoS data flow.

**Step 2106-3:** the access network device sends the measurement result of the QoS data flow to the UPF.

Illustratively, after the measurement of the QoS data flow is completed, the access network device sends the measurement result of the QoS data flow to the UPF.

**Step 2106-4:** the access network device sends the measurement result of the QoS data flow to the AF.

In some embodiments of the present disclosure, the access network device sends the measurement result of the QoS data flow through at least one of the following modes: sending the measurement result of the QoS data flow to the AF via the SMF and the PCF; sending, by the access network device, the measurement result of the QoS data flow to the AF via the UPF, the SMF and the PCF; or sending, by the access network device, the measurement result of the QoS data flow to the AF via the UPF.

In some embodiments of the present disclosure, the access network device sends the measurement result of the QoS data flow through at least one of the following modes: sending the measurement result of the QoS data flow to the AF via the SMF, the PCF and the NEF; sending the measurement result of the QoS data flow to the AF via the UPF, the SMF, the PCF and the NEF; or sending the measurement result of the QoS data flow to the AF via the UPF and the NEF.

In some embodiments of the present disclosure, a name of information is not limited to that recorded in the embodiments, and the terms "information", "message", "signal", "signaling", "report", "configuration", "indication", "instruction", "command", "channel", "parameter", "domain", "field", "symbol", "codebook", "codeword", "codepoint", "bit", "data", "program" and "chip" may be replaced with each other.

In some embodiments of the present disclosure, the terms "radio", "wireless", "RAN", "access network (AN)" and "RAN-based" may be replaced with each other.

In some embodiments of the present disclosure, the terms "obtain", "collect", "receive", "transmit", "two-way transmit" and "send and/or receive" may be replaced with each other, and they may be interpreted as receiving from the other body, obtaining from a protocol, obtaining through processing by itself, or autonomous implementation.

In some embodiments of the present disclosure, the terms "send", "transmit", "report", "issue", "transmit", "two-way transmit" and "send and/or receive" may be replaced with each other.

In some embodiments of the present disclosure, the terms "certain", "preset", "predetermined", "set", "indicated", "one of", "any of', and "first" may be replaced with each other. The terms "certain A", "preset A", "predetermined A", "set A", "indicated A", "one of As", "any one of As" and "first A" may be interpreted as a predetermined A in a protocol, or as A obtained through setting, configuration or indication, or as a certain A, one of As, any one of As or a first A, which will not be particularly defined herein.

In some embodiments of the present disclosure, the term "determining" may be interpreted as, but not limited to, judging, deciding, calculating, computing, processing, deriving, investigating, searching, looking up, inquiry, ascertaining, receiving, transmitting, inputting, outputting, accessing, resolving, selecting, choosing, establishing, comparing, assuming, expecting, considering, broadcasting, notifying, communicating, forwarding, configuring, reconfiguring, allocating, mapping, or assigning.

The measurement method involved in the embodiments of the present disclosure includes at least one of Steps S2101 to S2106.

In an embodiment of the present disclosure, part of or all of the steps and the optional implementation modes thereof may be combined with part of or all of the steps in the other embodiments of the present disclosure, or combined with the optional implementation modes in the other embodiments of the present disclosure.

In some embodiments of the present disclosure, Step S2105-2 may be performed after Step S2106-2, or they may be performed simultaneously.

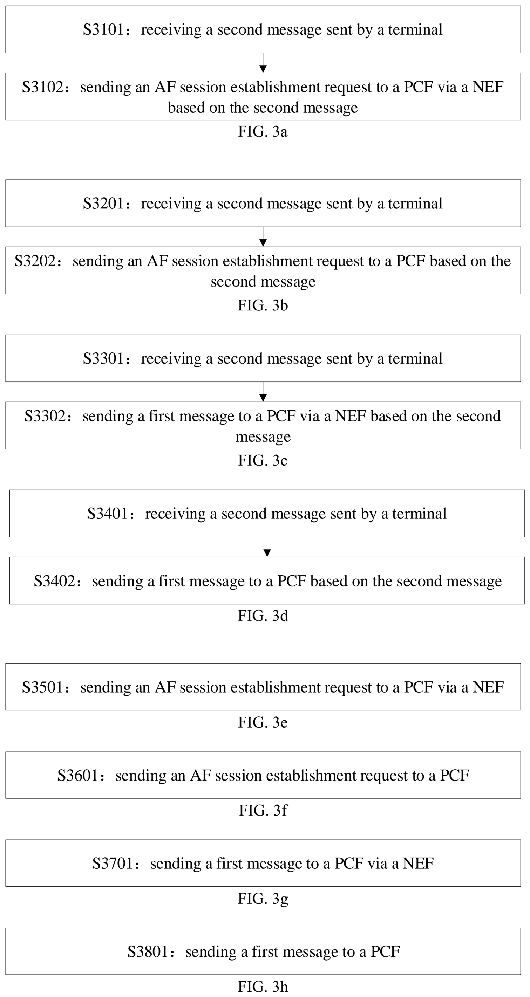

FIG. 3a is a flow chart of a measurement method according to an embodiment of the present disclosure. As shown in FIG. 3a, the measurement method involved in the embodiments of the present disclosure is executed by an AF 1031, and includes the following steps.

**Step S3101:** the AF receives a second message sent by a terminal.

**Step S3102:** the AF sends an AF session establishment request to a PCF via a NEF based on the second message.

An optional implementation mode of Step S3102 may refer to the optional implementation mode of Step S2102 in FIG. 2 and the other associated parts in the embodiments involved in FIG. 2, and thus will not be particularly defined herein.

In some embodiments of the present disclosure, Step S3101 is optional, and one or more steps in these steps may be omitted or replaced with the other steps in different embodiments.

In an embodiment of the present disclosure, part of or all of the steps and the optional implementation modes thereof may be combined with part of or all of the steps in the other embodiments of the present disclosure, or combined with the optional implementation modes in the other embodiments of the present disclosure.

FIG. 3b is a flow chart of a measurement method according to an embodiment of the present disclosure. As shown in FIG. 3b, the measurement method involved in the embodiments of the present disclosure is executed by an AF 1031, and includes the following steps.

**Step S3201:** the AF receives a second message sent by a terminal.

**Step S3202:** the AF sends an AF session establishment request to a PCF based on the second message.

Optionally, the AF is a trusted AF, and the AF sends the AF session establishment request to the PCF.

In some embodiments of the present disclosure, Step S3201 is optional, and one or more steps in these steps may be omitted or replaced with the other steps in different embodiments.

In an embodiment of the present disclosure, part of or all of the steps and the optional implementation modes thereof may be combined with part of or all of the steps in the other embodiments of the present disclosure, or combined with the optional implementation modes in the other embodiments of the present disclosure.

FIG. 3c is a flow chart of a measurement method according to an embodiment of the present disclosure. As shown in FIG. 3c, the measurement method involved in the embodiments of the present disclosure is executed by an AF 1031, and includes the following steps.

**Step S3301:** the AF receives a second message sent by a terminal.

**Step S3302:** the AF sends a first message to a PCF based on the second message.

In some embodiments of the present disclosure, the AF receives the second message sent by the terminal, and sends the first message to the PCF via a NEF based on the second message.

Illustratively, the AF sends an AF session establishment request to the NEF, and upon the receipt of the AF session establishment request, the NEF sends the first message to the PCF.

Optionally, the AF is an untrusted AF, and the AF sends the first message to the PCF via the NEF.

It should be appreciated that the untrusted AF is an AF which has not been authenticated and authorized yet, or an AF which has already been authenticated but belongs to a third party.

Illustratively, the AF sends the first message to the NEF via a Nnef_AFsessionWithQoS_Create.

Optionally, the NEF authorizes an AF request based on the first message sent by the AF, and determines whether to trigger a TSCTSF or directly establish a connection with the PCF, and the PCF receives an attribute provided by the AF from the NEF or the TSCTSF.

It should be appreciated that a signaling step in the above processing is the same as a signaling step for setting an AF session of a QoS program in a 3GPP protocol, and thus will not be particularly defined herein.

In some embodiments of the present disclosure, Step S3301 is optional, and one or more steps in these steps may be omitted or replaced with the other steps in different embodiments.

In an embodiment of the present disclosure, part of or all of the steps and the optional implementation modes thereof may be combined with part of or all of the steps in the other embodiments of the present disclosure, or combined with the optional implementation modes in the other embodiments of the present disclosure.

FIG. 3d is a flow chart of a measurement method according to an embodiment of the present disclosure. As shown in FIG. 3d, the measurement method involved in the embodiments of the present disclosure is executed by an AF 1031, and includes the following steps.

**Step S3401:** the AF receives a second message sent by a terminal.

**Step S3402:** the AF sends a first message to a PCF based on the second message.

Optionally, the AF is a trusted AF, and the AF sends the first message to the PCF.

It should be appreciated that the trusted AF is an AF which has already been authenticated and authorized.

In some embodiments of the present disclosure, Step S3401 is optional, and one or more steps in these steps may be omitted or replaced with the other steps in different embodiments.

In an embodiment of the present disclosure, part of or all of the steps and the optional implementation modes thereof may be combined with part of or all of the steps in the other embodiments of the present disclosure, or combined with the optional implementation modes in the other embodiments of the present disclosure.

FIG. 3e is a flow chart of a measurement method according to an embodiment of the present disclosure. As shown in FIG. 3e, the measurement method involved in the embodiments of the present disclosure is executed by an AF 1031, and includes the following step.

**Step S3501:** the AF sends an AF session establishment request to a PCF via a NEF.

An optional implementation mode of Step S3501 may refer to the optional implementation modes of Step S2102 in FIG. 2 and Step S3102 in FIG. 3a as well as the other associated parts in the embodiments involved in FIG. 2, and thus will not be particularly defined herein.

In an embodiment of the present disclosure, part of or all of the steps and the optional implementation modes thereof may be combined with part of or all of the steps in the other embodiments of the present disclosure, or combined with the optional implementation modes in the other embodiments of the present disclosure.

FIG. 3f is a flow chart of a measurement method according to an embodiment of the present disclosure. As shown in FIG. 3f, the measurement method involved in the embodiments of the present disclosure is executed by an AF 1031, and includes the following step.

**Step S3601:** the AF sends an AF session establishment request to a PCF.

An optional implementation mode of Step S3601 may refer to the optional implementation modes of Step S2102 in FIG. 2 and Step S3202 in FIG. 3b as well as the other associated parts in the embodiments involved in FIG. 2, and thus will not be particularly defined herein.

In an embodiment of the present disclosure, part of or all of the steps and the optional implementation modes thereof may be combined with part of or all of the steps in the other embodiments of the present disclosure, or combined with the optional implementation modes in the other embodiments of the present disclosure.

FIG. 3g is a flow chart of a measurement method according to an embodiment of the present disclosure. As shown in FIG. 3g, the measurement method involved in the embodiments of the present disclosure is executed by an AF 1031, and includes the following steps.

**Step S3701:** the AF sends a first message to a PCF via a NEF.

An optional implementation mode of Step S3701 may refer to the optional implementation modes of Step S2102 in FIG. 2 and Step S3302 in FIG. 3c as well as the other associated parts in the embodiments involved in FIG. 2, and thus will not be particularly defined herein.

In an embodiment of the present disclosure, part of or all of the steps and the optional implementation modes thereof may be combined with part of or all of the steps in the other embodiments of the present disclosure, or combined with the optional implementation modes in the other embodiments of the present disclosure.

FIG. 3h is a flow chart of a measurement method according to an embodiment of the present disclosure. As shown in FIG. 3h, the measurement method involved in the embodiments of the present disclosure is executed by an AF 1031, and includes the following steps.

**Step S3801:** the AF sends a first message to a PCF.

An optional implementation mode of Step S3801 may refer to the optional implementation modes of Step S2102 in FIG. 2 and Step S3402 in FIG. 3d as well as the other associated parts in the embodiments involved in FIG. 2, and thus will not be particularly defined herein.

In an embodiment of the present disclosure, part of or all of the steps and the optional implementation modes thereof may be combined with part of or all of the steps in the other embodiments of the present disclosure, or combined with the optional implementation modes in the other embodiments of the present disclosure.

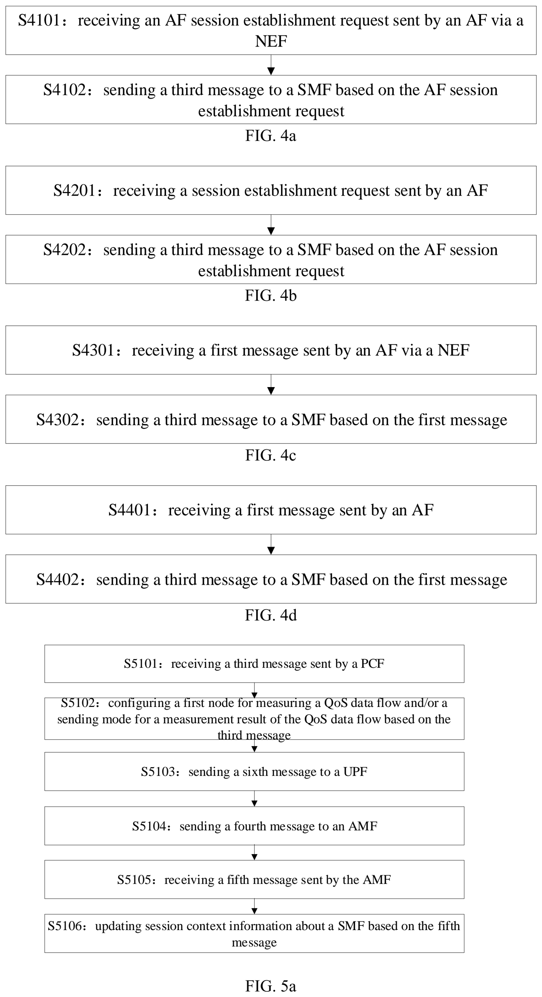

FIG. 4a is a flow chart of a measurement method according to an embodiment of the present disclosure. As shown in FIG. 4a, the measurement method involved in the embodiments of the present disclosure is executed by a PCF 1032 and includes the following steps.

**Step S4101:** the PCF receives an AF session establishment request sent by an AF via a NEF.

An optional implementation mode of Step S4101 may refer to the optional implementation modes of Step S2103 in FIG. 2 and Step S3102 in FIG. 3a as well as the other associated parts in the embodiments involved in FIG. 2 and FIG. 3a, and thus will not be particularly defined herein.

**Step S4102:** the PCF sends a third message to an SMF based on the AF session establishment request.

An optional implementation mode of Step S4102 may refer to the optional implementation modes of Step S2103 in FIG. 2 as well as the other associated parts in the embodiments involved in FIG. 2, and thus will not be particularly defined herein.

In an embodiment of the present disclosure, part of or all of the steps and the optional implementation modes thereof may be combined with part of or all of the steps in the other embodiments of the present disclosure, or combined with the optional implementation modes in the other embodiments of the present disclosure.

FIG. 4b is a flow chart of a measurement method according to an embodiment of the present disclosure. As shown in FIG. 4b, the measurement method involved in the embodiments of the present disclosure is executed by a PCF 1032 and includes the following steps.

**Step S4201:** the PCF receives a session establishment request sent by an AF.

Optionally, the AF is a trusted AF, and the PCF receives the AF session establishment request sent by the AF.

Optionally, the PCF determines a PCC rule based on the AF session establishment request, and sends the PCC rule to an SMF.

In some embodiments of the present disclosure, the PCF determines the PCC rule based on a first message and/or an operator's policy in the AF session establishment request.

The operator's policy is a local or OAM configuration.

Optionally, upon the receipt of the AF session establishment request, the PCF determines the PCC rule based on a service type as well as the first message and/or the operator's policy in the AF session establishment request.

**Step S4202:** the PCF sends a third message to the SMF based on the AF session establishment request.

An optional implementation mode of Step S4202 may refer to the optional implementation modes of Step S2103 in FIG. 2 as well as the other associated parts in the embodiments involved in FIG. 2, and thus will not be particularly defined herein.

In an embodiment of the present disclosure, part of or all of the steps and the optional implementation modes thereof may be combined with part of or all of the steps in the other embodiments of the present disclosure, or combined with the optional implementation modes in the other embodiments of the present disclosure.

FIG. 4c is a flow chart of a measurement method according to an embodiment of the present disclosure. As shown in FIG. 4c, the measurement method involved in the embodiments of the present disclosure is executed by a PCF 1032 and includes the following steps.

**Step S4301:** the PCF receives a first message sent by an AF via a NEF.

In some embodiments of the present disclosure, the PCF receives the first message sent by the AF via the NEF.

Optionally, the AF is an untrusted AF, and the PCF receives the first message sent by the AF via the NEF.

In some embodiments of the present disclosure, upon the receipt of the first message sent by the NEF, the PCF determines updated or new policy information to be sent to an SMF.

Optionally, the PCF determines a PCC rule based on an AF session establishment request, and sends the PCC rule to the SMF.

In some embodiments of the present disclosure, the PCF determines the PCC rule based on the first message and an operator's policy.

The operator's policy is a local or OAM configuration.

Optionally, upon the receipt of the first message, the PCF determines the PCC rule based on a service type as well as the first message and/or the operator's policy.

**Step 4302:** the PCF sends a third message to the SMF based on the first message.

An optional implementation mode of Step S4302 may refer to the optional implementation modes of Step S2103 in FIG. 2 as well as the other associated parts in the embodiments involved in FIG. 2, and thus will not be particularly defined herein.

In an embodiment of the present disclosure, part of or all of the steps and the optional implementation modes thereof may be combined with part of or all of the steps in the other embodiments of the present disclosure, or combined with the optional implementation modes in the other embodiments of the present disclosure.

FIG. 4d is a flow chart of a measurement method according to an embodiment of the present disclosure. As shown in FIG. 4d, the measurement method involved in the embodiments of the present disclosure is executed by a PCF 1032 and includes the following steps.

**Step S4401:** the PCF receives a first message sent by an AF.

Optionally, the AF is a trusted AF, and the PCF receives the first message sent by the AF.

Optionally, the PCF determines a PCC rule based on the first message, and sends the PCC rule to an SMF.

In some embodiments of the present disclosure, the PCF determines the PCC rule based on the first message and an operator's policy.

The operator's policy is a local or OAM configuration.

Optionally, upon the receipt of the first message, the PCF determines the PCC rule based on a service type as well the first message and/or the operator's policy.

**Step S4402:** the PCF sends a third message to the SMF based on the first message.

An optional implementation mode of Step S4402 may refer to the optional implementation modes of Step S2103 in FIG. 2 as well as the other associated parts in the embodiments involved in FIG. 2, and thus will not be particularly defined herein.

In an embodiment of the present disclosure, part of or all of the steps and the optional implementation modes thereof may be combined with part of or all of the steps in the other embodiments of the present disclosure, or combined with the optional implementation modes in the other embodiments of the present disclosure.

FIG. 5a is a flow chart of a measurement method according to an embodiment of the present disclosure. As shown in FIG. 5a, the measurement method involved in the embodiments of the present disclosure is executed by an SMF 1033 and includes the following steps.

**Step S5101:** the SMF receives a third message sent by a PCF.

An optional implementation mode of Step S5101 may refer to the optional implementation modes of Step S2103 in FIG. 2 as well as the other associated parts in the embodiments involved in FIG. 2, and thus will not be particularly defined herein.

**Step S5102:** the SMF configures a first node for measuring a QoS data flow and/or a sending mode for a measurement result of the QoS data flow based on the third message.

An optional implementation mode of Step S5102 may refer to the optional implementation modes of Step S2104-1 in FIG. 2 as well as the other associated parts in the embodiments involved in FIG. 2, and thus will not be particularly defined herein.

**Step S5103:** the SMF sends a sixth message to a UPF.

An optional implementation mode of Step S5103 may refer to the optional implementation modes of Step S2104-2 in FIG. 2 as well as the other associated parts in the embodiments involved in FIG. 2, and thus will not be particularly defined herein.

**Step S5104:** the SMF sends a fourth message to an AMF.

An optional implementation mode of Step S5104 may refer to the optional implementation modes of Step S2104-3 in FIG. 2 as well as the other associated parts in the embodiments involved in FIG. 2, and thus will not be particularly defined herein.

**Step S5105:** the SMF receives a fifth message sent by the AMF.

An optional implementation mode of Step S5105 may refer to the optional implementation modes of Step S2104-4 in FIG. 2 as well as the other associated parts in the embodiments involved in FIG. 2, and thus will not be particularly defined herein.

**Step S5106:** the SMF updates session context information about the SMF based on the fifth message.

An optional implementation mode of Step S5106 may refer to the optional implementation modes of Step S2104-5 in FIG. 2 as well as the other associated parts in the embodiments involved in FIG. 2, and thus will not be particularly defined herein.

In some embodiments of the present disclosure, Steps S5103, S5104, S5105 and S5106 are optional, and one or more steps in these step may be omitted or replaced with the other steps in different embodiments.

In an embodiment of the present disclosure, part of or all of the steps and the optional implementation modes thereof may be combined with part of or all of the steps in the other embodiments of the present disclosure, or combined with the optional implementation modes in the other embodiments of the present disclosure.

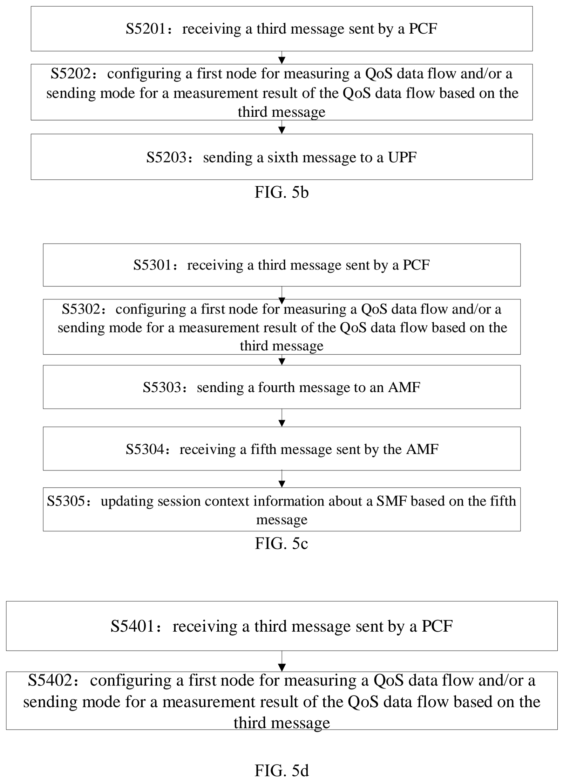

FIG. 5b is a flow chart of a measurement method according to an embodiment of the present disclosure. As shown in FIG. 5b, the measurement method involved in the embodiments of the present disclosure is executed by an SMF 1033 and includes the following steps.

**Step S5201:** the SMF receives a third message sent by a PCF.

An optional implementation mode of Step S5201 may refer to the optional implementation modes of Step S2103 in FIG. 2 as well as the other associated parts in the embodiments involved in FIG. 2, and thus will not be particularly defined herein.

**Step S5202:** the SMF configures a first node for measuring a QoS data flow and/or a sending mode for a measurement result of the QoS data flow based on the third message.

An optional implementation mode of Step S5202 may refer to the optional implementation modes of Step S2104-1 in FIG. 2 as well as the other associated parts in the embodiments involved in FIG. 2, and thus will not be particularly defined herein.

**Step S5203:** the SMF sends a sixth message to a UPF.

An optional implementation mode of Step S5203 may refer to the optional implementation modes of Step S2104-2 in FIG. 2 as well as the other associated parts in the embodiments involved in FIG. 2, and thus will not be particularly defined herein.

In some embodiments of the present disclosure, Step S5203 is optional, and one or more steps in these steps may be omitted or replaced with the other steps in different embodiments.

In an embodiment of the present disclosure, part of or all of the steps and the optional implementation modes thereof may be combined with part of or all of the steps in the other embodiments of the present disclosure, or combined with the optional implementation modes in the other embodiments of the present disclosure.

FIG. 5c is a flow chart of a measurement method according to an embodiment of the present disclosure. As shown in FIG. 5c, the measurement method involved in the embodiments of the present disclosure is executed by an SMF 1033 and includes the following steps.

**Step S5301:** the SMF receives a third message sent by a PCF.

An optional implementation mode of Step S5301 may refer to the optional implementation modes of Step S2103 in FIG. 2 as well as the other associated parts in the embodiments involved in FIG. 2, and thus will not be particularly defined herein.

**Step S5302:** the SMF configures a first node for measuring a QoS data flow and/or a sending mode for a measurement result of the QoS data flow based on the third message.

An optional implementation mode of Step S5302 may refer to the optional implementation modes of Step S2104-1 in FIG. 2 as well as the other associated parts in the embodiments involved in FIG. 2, and thus will not be particularly defined herein.

**Step S5303:** the SMF sends a fourth message to an AMF.

The fourth message includes a first message.

An optional implementation mode of Step S5303 may refer to the optional implementation modes of Step S2104-3 in FIG. 2 as well as the other associated parts in the embodiments involved in FIG. 2, and thus will not be particularly defined herein.

**Step S5304:** the SMF receives a fifth message sent by the AMF.

An optional implementation mode of Step S5304 may refer to the optional implementation modes of Step S2104-4 in FIG. 2 as well as the other associated parts in the embodiments involved in FIG. 2, and thus will not be particularly defined herein.

**Step S5305:** the SMF updates session context information about the SMF based on the fifth message.

An optional implementation mode of Step S5305 may refer to the optional implementation modes of Step S2104-5 in FIG. 2 as well as the other associated parts in the embodiments involved in FIG. 2, and thus will not be particularly defined herein.

In some embodiments of the present disclosure, Steps S5303, S5304 and S5305 are optional, and one or more steps in these step may be omitted or replaced with the other steps in different embodiments.

In an embodiment of the present disclosure, part of or all of the steps and the optional implementation modes thereof may be combined with part of or all of the steps in the other embodiments of the present disclosure, or combined with the optional implementation modes in the other embodiments of the present disclosure.

FIG. 5d is a flow chart of a measurement method according to an embodiment of the present disclosure. As shown in FIG. 5d, the measurement method involved in the embodiments of the present disclosure is executed by an SMF 1033 and includes the following steps.

**Step S5401:** the SMF receives a third message sent by a PCF.

An optional implementation mode of Step S5401 may refer to the optional implementation modes of Step S2103 in FIG. 2 as well as the other associated parts in the embodiments involved in FIG. 2, and thus will not be particularly defined herein.

**Step S5402:** the SMF configures a first node for measuring a QoS data flow and/or a sending mode for a measurement result of the QoS data flow based on the third message.

An optional implementation mode of Step S5402 may refer to the optional implementation modes of Step S2104-1 in FIG. 2 as well as the other associated parts in the embodiments involved in FIG. 2, and thus will not be particularly defined herein.

In an embodiment of the present disclosure, part of or all of the steps and the optional implementation modes thereof may be combined with part of or all of the steps in the other embodiments of the present disclosure, or combined with the optional implementation modes in the other embodiments of the present disclosure.

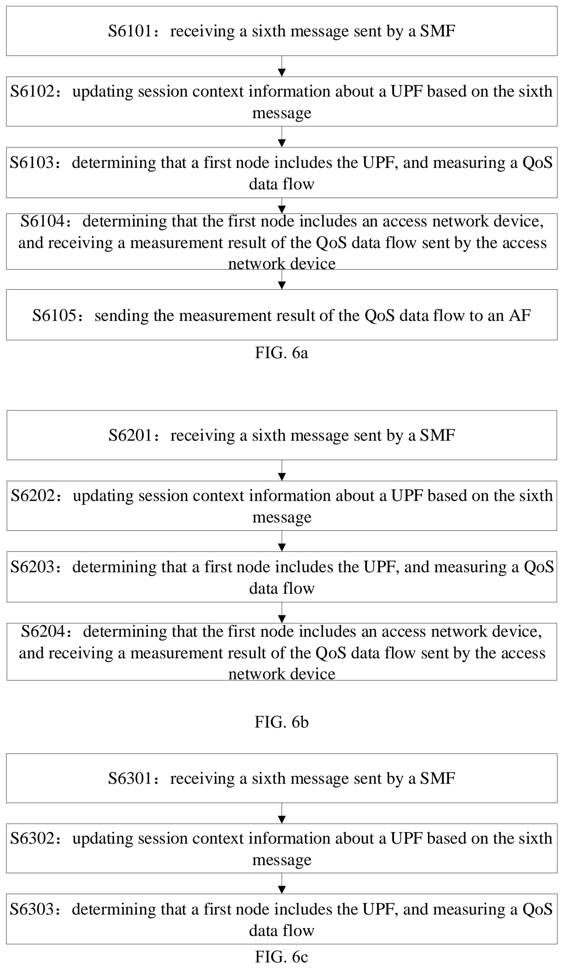

FIG. 6a is a flow chart of a measurement method according to an embodiment of the present disclosure. As shown in FIG. 6a, the measurement method involved in the embodiments of the present disclosure is executed by a UPF 1034 and includes the following steps.

**Step S6101:** the UPF receives a sixth message sent by an SMF.

An optional implementation mode of Step S6101 may refer to the optional implementation modes of Step S2104-2 in FIG. 2 as well as the other associated parts in the embodiments involved in FIG. 2, and thus will not be particularly defined herein.

**Step S6102:** the UPF updates session context information about the UPF based on the sixth message.

An optional implementation mode of Step S6102 may refer to the optional implementation modes of Step S2105-1 in FIG. 2 as well as the other associated parts in the embodiments involved in FIG. 2, and thus will not be particularly defined herein.

**Step S6103:** the UPF determines that a first node includes the UPF, and measures a QoS data flow.

An optional implementation mode of Step S6103 may refer to the optional implementation modes of Step S2105-2 in FIG. 2 as well as the other associated parts in the embodiments involved in FIG. 2, and thus will not be particularly defined herein.

**Step S6104:** the UPF determines that the first node includes an access network device, and receives a measurement result of the QoS data flow sent by the access network device.

An optional implementation mode of Step S6104 may refer to the optional implementation modes of Step S2105-3 in FIG. 2 as well as the other associated parts in the embodiments involved in FIG. 2, and thus will not be particularly defined herein.

**Step S6105:** the UPF sends the measurement result of the QoS data flow to the AF.

An optional implementation mode of Step S6105 may refer to the optional implementation modes of Step S2105-4 in FIG. 2 as well as the other associated parts in the embodiments involved in FIG. 2, and thus will not be particularly defined herein.

In some embodiments of the present disclosure, Step S6103 is optional, and one or more steps in these step may be omitted or replaced with the other steps in different embodiments.

In some embodiments of the present disclosure, Steps S6104 and S6105 are optional, and one or more steps in these step may be omitted or replaced with the other steps in different embodiments.

In an embodiment of the present disclosure, part of or all of the steps and the optional implementation modes thereof may be combined with part of or all of the steps in the other embodiments of the present disclosure, or combined with the optional implementation modes in the other embodiments of the present disclosure.

FIG. 6b is a flow chart of a measurement method according to an embodiment of the present disclosure. As shown in FIG. 6b, the measurement method involved in the embodiments of the present disclosure is executed by a UPF 1034 and includes the following steps.

**Step S6201:** the UPF receives a sixth message sent by an SMF.

An optional implementation mode of Step S6201 may refer to the optional implementation modes of Step S2104-2 in FIG. 2 as well as the other associated parts in the embodiments involved in FIG. 2, and thus will not be particularly defined herein.

**Step S6202:** the UPF updates session context information about the UPF based on the sixth message.

An optional implementation mode of Step S6202 may refer to the optional implementation modes of Step S2105-1 in FIG. 2 as well as the other associated parts in the embodiments involved in FIG. 2, and thus will not be particularly defined herein.

**Step S6203:** the UPF determines that the first node includes the UPF, and measures a QoS data flow.

An optional implementation mode of Step S6203 may refer to the optional implementation modes of Step S2105-2 in FIG. 2 as well as the other associated parts in the embodiments involved in FIG. 2, and thus will not be particularly defined herein.

**Step S6204:** the UPF determines that the first node includes an access network device, and receives a measurement result of the QoS data flow sent by the access network device.

An optional implementation mode of Step S6204 may refer to the optional implementation modes of Step S2105-3 in FIG. 2 as well as the other associated parts in the embodiments involved in FIG. 2, and thus will not be particularly defined herein.

In some embodiments of the present disclosure, Step S6203 is optional, and one or more steps in these step may be omitted or replaced with the other steps in different embodiments.

In some embodiments of the present disclosure, Step S6204 is optional, and one or more steps in these step may be omitted or replaced with the other steps in different embodiments.

In an embodiment of the present disclosure, part of or all of the steps and the optional implementation modes thereof may be combined with part of or all of the steps in the other embodiments of the present disclosure, or combined with the optional implementation modes in the other embodiments of the present disclosure.

FIG. 6c is a flow chart of a measurement method according to an embodiment of the present disclosure. As shown in FIG. 6c, the measurement method involved in the embodiments of the present disclosure is executed by a UPF 1034 and includes the following steps.

**Step S6301:** the UPF receives a sixth message sent by an SMF.

An optional implementation mode of Step S6301 may refer to the optional implementation modes of Step S2104-2 in FIG. 2 as well as the other associated parts in the embodiments involved in FIG. 2, and thus will not be particularly defined herein.

**Step S6302:** the UPF updates session context information about the UPF based on the sixth message.

An optional implementation mode of Step S6302 may refer to the optional implementation modes of Step S2105-1 in FIG. 2 as well as the other associated parts in the embodiments involved in FIG. 2, and thus will not be particularly defined herein.

**Step S6303:** the UPF determines that a first node includes the UPF, and measures a QoS data flow.

An optional implementation mode of Step S6303 may refer to the optional implementation modes of Step S2105-2 in FIG. 2 as well as the other associated parts in the embodiments involved in FIG. 2, and thus will not be particularly defined herein.

In some embodiments of the present disclosure, Step S6303 is optional, and one or more steps in these step may be omitted or replaced with the other steps in different embodiments.

In an embodiment of the present disclosure, part of or all of the steps and the optional implementation modes thereof may be combined with part of or all of the steps in the other embodiments of the present disclosure, or combined with the optional implementation modes in the other embodiments of the present disclosure.

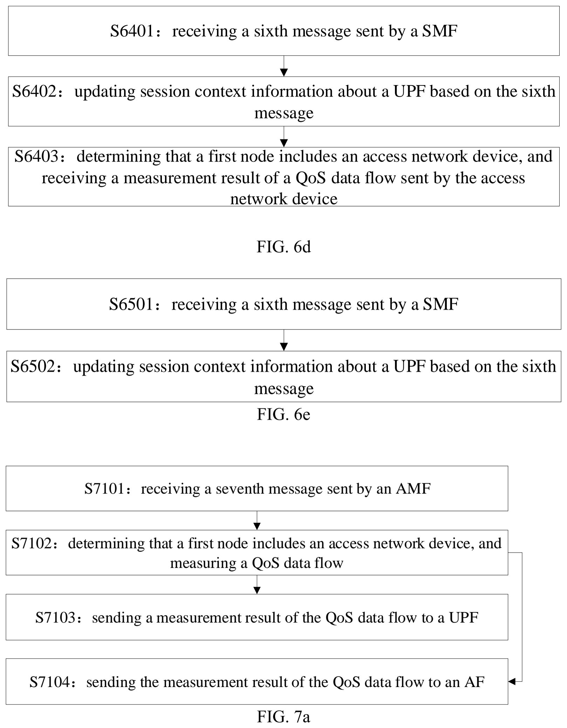

FIG. 6d is a flow chart of a measurement method according to an embodiment of the present disclosure. As shown in FIG. 6d, the measurement method involved in the embodiments of the present disclosure is executed by a UPF 1034 and includes the following steps.

**Step S6401:** the UPF receives a sixth message sent by an SMF.

An optional implementation mode of Step S6401 may refer to the optional implementation modes of Step S2104-2 in FIG. 2 as well as the other associated parts in the embodiments involved in FIG. 2, and thus will not be particularly defined herein.

**Step S6402:** the UPF updates session context information about the UPF based on the sixth message.

An optional implementation mode of Step S6402 may refer to the optional implementation modes of Step S2105-1 in FIG. 2 as well as the other associated parts in the embodiments involved in FIG. 2, and thus will not be particularly defined herein.

**Step S6403:** the UPF determines that a first node includes an access network device, and receives a measurement result of a QoS data flow sent by the access network device.

An optional implementation mode of Step S6403 may refer to the optional implementation modes of Step S2105-3 in FIG. 2 as well as the other associated parts in the embodiments involved in FIG. 2, and thus will not be particularly defined herein.

In some embodiments of the present disclosure, Step S6403 is optional, and one or more steps in these step may be omitted or replaced with the other steps in different embodiments.

In an embodiment of the present disclosure, part of or all of the steps and the optional implementation modes thereof may be combined with part of or all of the steps in the other embodiments of the present disclosure, or combined with the optional implementation modes in the other embodiments of the present disclosure.

FIG. 6e is a flow chart of a measurement method according to an embodiment of the present disclosure. As shown in FIG. 6e, the measurement method involved in the embodiments of the present disclosure is executed by a UPF 1034 and includes the following steps.

**Step S6501:** the UPF receives a sixth message sent by an SMF.

An optional implementation mode of Step S6501 may refer to the optional implementation modes of Step S2104-2 in FIG. 2 as well as the other associated parts in the embodiments involved in FIG. 2, and thus will not be particularly defined herein.

**Step S6502:** the UPF updates session context information about the UPF based on the sixth message.

An optional implementation mode of Step S6502 may refer to the optional implementation modes of Step S2105-1 in FIG. 2 as well as the other associated parts in the embodiments involved in FIG. 2, and thus will not be particularly defined herein.

In an embodiment of the present disclosure, part of or all of the steps and the optional implementation modes thereof may be combined with part of or all of the steps in the other embodiments of the present disclosure, or combined with the optional implementation modes in the other embodiments of the present disclosure.

FIG. 7a is a flow chart of a measurement method according to an embodiment of the present disclosure. As shown in FIG. 7a, the measurement method involved in the embodiments of the present disclosure is executed by an access network device 102 and includes the following steps.

**Step S7101:** the access network device receives a seventh message sent by an AMF.

An optional implementation mode of Step S7101 may refer to the optional implementation modes of Step S2106-1 in FIG. 2 as well as the other associated parts in the embodiments involved in FIG. 2, and thus will not be particularly defined herein.

**Step S7102:** the access network device determines a first node includes the access network device, and measures a QoS data flow.

An optional implementation mode of Step S7102 may refer to the optional implementation modes of Step S2106-2 in FIG. 2 as well as the other associated parts in the embodiments involved in FIG. 2, and thus will not be particularly defined herein.

**Step S7103:** the access network device sends a measurement result of the QoS data flow to a UPF.

An optional implementation mode of Step S7103 may refer to the optional implementation modes of Step S2106-3 in FIG. 2 as well as the other associated parts in the embodiments involved in FIG. 2, and thus will not be particularly defined herein.

**Step S7104:** the access network device sends the measurement result of the QoS data flow to an AF.

An optional implementation mode of Step S7104 may refer to the optional implementation modes of Step S2106-4 in FIG. 2 as well as the other associated parts in the embodiments involved in FIG. 2, and thus will not be particularly defined herein.

It should be appreciated that, in the embodiments of the present disclosure, an order of Steps S7103 and S7104 will not be particularly defined, i.e., Step S7103 may be performed before or after Step S7104, or Steps S7103 and S7104 may be performed simultaneously.

In some embodiments of the present disclosure, Steps S7102, S7103 and S7104 are optional, and one or more steps in these step may be omitted or replaced with the other steps in different embodiments.

In an embodiment of the present disclosure, part of or all of the steps and the optional implementation modes thereof may be combined with part of or all of the steps in the other embodiments of the present disclosure, or combined with the optional implementation modes in the other embodiments of the present disclosure.

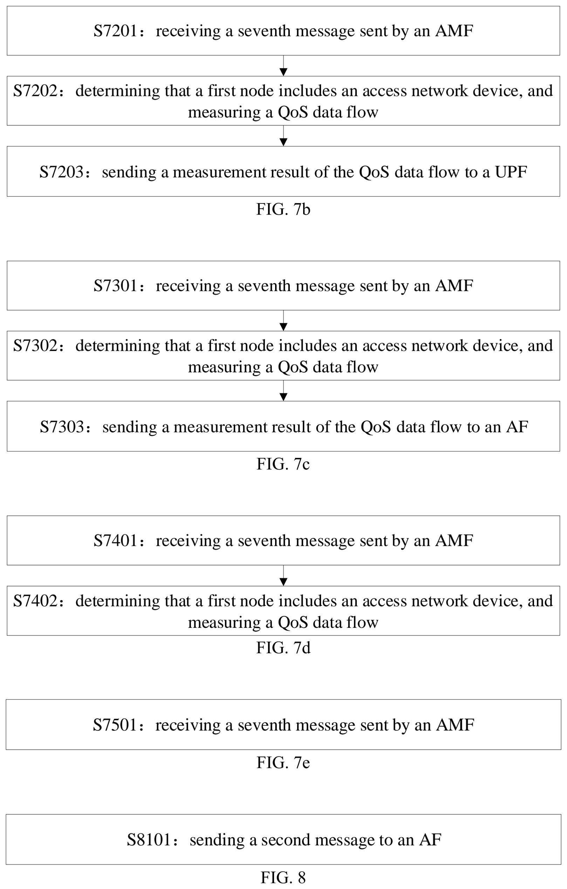

FIG. 7b is a flow chart of a measurement method according to an embodiment of the present disclosure. As shown in FIG. 7b, the measurement method involved in the embodiments of the present disclosure is executed by an access network device 102 and includes the following steps.

**Step S7201:** the access network device receives a seventh message sent by an AMF.

An optional implementation mode of Step S7201 may refer to the optional implementation modes of Step S2106-1 in FIG. 2 as well as the other associated parts in the embodiments involved in FIG. 2, and thus will not be particularly defined herein.

**Step S7202:** the access network device determines that a first node includes the access network device, and measures a QoS data flow.

An optional implementation mode of Step S7202 may refer to the optional implementation modes of Step S2106-2 in FIG. 2 as well as the other associated parts in the embodiments involved in FIG. 2, and thus will not be particularly defined herein.

**Step S7203:** the access network device sends a measurement result of the QoS data flow to a UPF.

An optional implementation mode of Step S7203 may refer to the optional implementation modes of Step S2106-3 in FIG. 2 as well as the other associated parts in the embodiments involved in FIG. 2, and thus will not be particularly defined herein.

In some embodiments of the present disclosure, Steps S7202 and S7203 are optional, and one or more steps in these step may be omitted or replaced with the other steps in different embodiments.

In an embodiment of the present disclosure, part of or all of the steps and the optional implementation modes thereof may be combined with part of or all of the steps in the other embodiments of the present disclosure, or combined with the optional implementation modes in the other embodiments of the present disclosure.

FIG. 7c is a flow chart of a measurement method according to an embodiment of the present disclosure. As shown in FIG. 7c, the measurement method involved in the embodiments of the present disclosure is executed by an access network device 102 and includes the following steps.

**Step S7301:** the access network device receives a seventh message sent by an AMF.

An optional implementation mode of Step S7301 may refer to the optional implementation modes of Step S2106-1 in FIG. 2 as well as the other associated parts in the embodiments involved in FIG. 2, and thus will not be particularly defined herein.

**Step S7302:** the access network device determines that a first node includes the access network device, and measures a QoS data flow.

An optional implementation mode of Step S7302 may refer to the optional implementation modes of Step S2106-2 in FIG. 2 as well as the other associated parts in the embodiments involved in FIG. 2, and thus will not be particularly defined herein.

**Step S7303:** the access network device sends a measurement result of the QoS data flow to an AF.

An optional implementation mode of Step S7303 may refer to the optional implementation modes of Step S2106-4 in FIG. 2 as well as the other associated parts in the embodiments involved in FIG. 2, and thus will not be particularly defined herein.

In some embodiments of the present disclosure, Steps S7202 and S7203 are optional, and one or more steps in these step may be omitted or replaced with the other steps in different embodiments.

In an embodiment of the present disclosure, part of or all of the steps and the optional implementation modes thereof may be combined with part of or all of the steps in the other embodiments of the present disclosure, or combined with the optional implementation modes in the other embodiments of the present disclosure.

FIG. 7d is a flow chart of a measurement method according to an embodiment of the present disclosure. As shown in FIG. 7d, the measurement method involved in the embodiments of the present disclosure is executed by an access network device 102 and includes the following steps.

**Step S7401:** the access network device receives a seventh message sent by an AMF.

An optional implementation mode of Step S7401 may refer to the optional implementation modes of Step S2106-1 in FIG. 2 as well as the other associated parts in the embodiments involved in FIG. 2, and thus will not be particularly defined herein.

**Step S7402:** the access network device determines a first node includes the access network device, and measures a QoS data flow.

An optional implementation mode of Step S7402 may refer to the optional implementation modes of Step S2106-2 in FIG. 2 as well as the other associated parts in the embodiments involved in FIG. 2, and thus will not be particularly defined herein.

In some embodiments of the present disclosure, Step S7402 is optional, and one or more steps in these step may be omitted or replaced with the other steps in different embodiments.

In an embodiment of the present disclosure, part of or all of the steps and the optional implementation modes thereof may be combined with part of or all of the steps in the other embodiments of the present disclosure, or combined with the optional implementation modes in the other embodiments of the present disclosure.

FIG. 7e is a flow chart of a measurement method according to an embodiment of the present disclosure. As shown in FIG. 7e, the measurement method involved in the embodiments of the present disclosure is executed by an access network device 102 and includes the following step.

**Step S7501:** the access network device receives a seventh message sent by an AMF.

An optional implementation mode of Step S7501 may refer to the optional implementation modes of Step S2106-1 in FIG. 2 as well as the other associated parts in the embodiments involved in FIG. 2, and thus will not be particularly defined herein.

FIG. 8 is a flow chart of a measurement method according to an embodiment of the present disclosure. As shown in FIG. 8, the measurement method involved in the embodiments of the present disclosure is executed by a terminal 101 and includes the following step.

**Step S8101:** the terminal sends a second message to an AF.

An optional implementation mode of Step S8101 may refer to the optional implementation modes of Step S2101 in FIG. 2 as well as the other associated parts in the embodiments involved in FIG. 2, and thus will not be particularly defined herein.

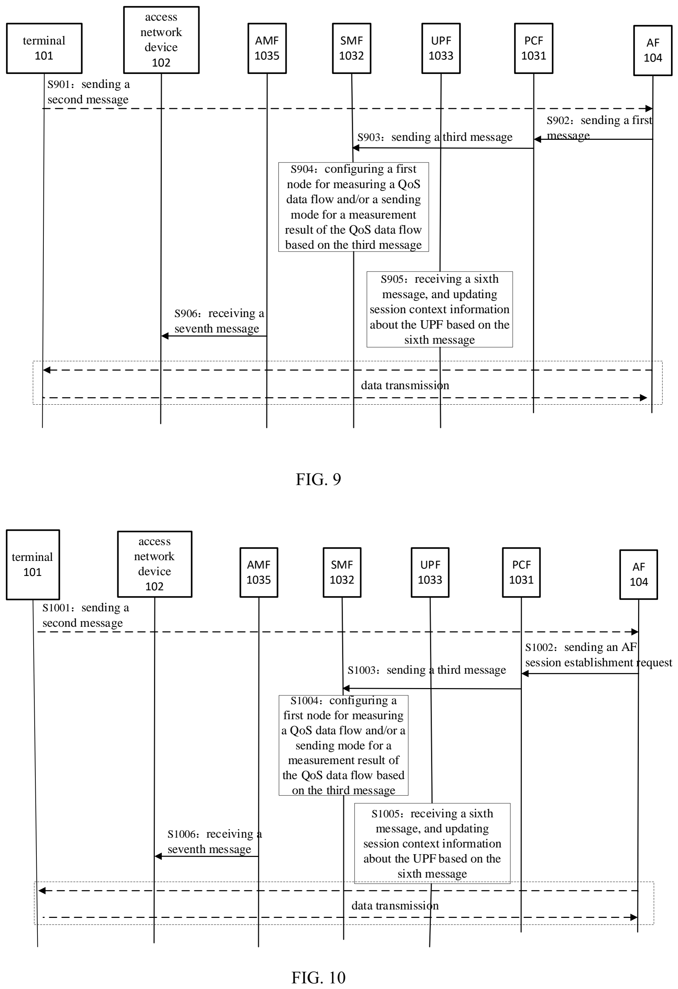

FIG. 9 is a schematic view showing an interaction of the measurement method according to an embodiment of the present disclosure. As shown in FIG. 9, the measurement method involved in the embodiments of the present disclosure is executed by a communication system 100 and includes the following steps.

**Step S901:** the terminal sends a second message to an AF.

An optional implementation mode of Step S901 may refer to the optional implementation modes of Step S2101 in FIG. 2 and Step S8101 in FIG. 8 as well as the other associated parts in the embodiments involved in FIG. 2 and FIG. 8, and thus will not be particularly defined herein.

**Step S902:** the AF sends a first message to a PCF.

An optional implementation mode of Step S902 may refer to the optional implementation modes of Step S3302 in FIG. 3c, Step S3402 in FIG. 3d, Step S3701 in FIG. 3g and Step S3801 in FIG. 3h as well as the other associated parts in the embodiments involved in FIG. 2, FIG. 3c, FIG. 3d, FIG. 3g and FIG. 3h, and thus will not be particularly defined herein.

**Step S903:** the PCF sends a third message to an SMF based on the first message.

An optional implementation mode of Step S903 may refer to the optional implementation modes of Step S4302 in FIG. 4c and Step S4402 in FIG. 4d as well as the other associated parts in the embodiments involved in FIG. 4c and FIG. 4d, and thus will not be particularly defined herein.

**Step S904:** the SMF configures a first node for measuring a QoS data flow and/or a sending mode for a measurement result of the QoS data flow based on the third message.

An optional implementation mode of Step S904 may refer to the optional implementation modes of Step S2104-1 in FIG. 2, Step S5102 in FIG. 5a, Step S5202 in FIG. 5b, Step S5302 in FIG. 5c and Step S5402 in FIG. 5d as well as the other associated parts in the embodiments involved in FIG. 2, FIG. 5a, FIG. 5b and FIG. 5c, and thus will not be particularly defined herein.

**Step S905:** the UPF receives a sixth message sent by the SMF, and updates session context information about the UPF based on the sixth message.

An optional implementation mode of Step S905 may refer to the optional implementation modes of Step S2105-1 in FIG. 2, Steps S6101 and S6102 in FIG. 6a, Steps S6201 and S6202 in FIG. 6b, Steps S6301 and S6302 in FIG. 6c, Steps S6401 and S6402 in FIG. 6d, and Steps S6501 and S6502 in FIG. 6e as well as the other associated parts in the embodiments involved in FIG. 2, FIG. 6a, FIG. 6b, FIG. 6c, FIG. 6d and FIG. 6e, and thus will not be particularly defined herein.

**Step S906:** the access network device receives a seventh message sent by an AMF.

An optional implementation mode of Step S906 may refer to the optional implementation modes of Step S2106-1 in FIG. 2, Step S7101 in FIG. 7a, Step S7201 in FIG. 7b, Step S7301 in FIG. 7c and Step S7401 in FIG. 7d as well as the other associated parts in the embodiments involved in FIG. 2, FIG. 7a, FIG. 7b, FIG. 7c and FIG. 7d, and thus will not be particularly defined herein.

In some embodiments of the present disclosure, Steps S901, S905 and S906 are optional, and one or more steps in these step may be omitted or replaced with the other steps in different embodiments.

In an embodiment of the present disclosure, part of or all of the steps and the optional implementation modes thereof may be combined with part of or all of the steps in the other embodiments of the present disclosure, or combined with the optional implementation modes in the other embodiments of the present disclosure.

FIG. 10 is a schematic view showing an interaction of a measurement method according to an embodiment of the present disclosure. As shown in FIG. 10, the measurement method involved in the embodiments of the present disclosure is executed by a communication system 100, and includes the following steps.

**Step S1001:** a terminal sends a second message to an AF.

An optional implementation mode of Step S1001 may refer to the optional implementation modes of Step S2101 in FIG. 2 and Step S8101 in FIG. 8 as well as the other associated parts in the embodiments involved in FIG. 2 and FIG. 8, and thus will not be particularly defined herein.

**Step S1002:** the AF sends an AF session establishment request to a PCF.

An optional implementation mode of Step S1002 may refer to the optional implementation modes of Step S2101 in FIG. 2, Step S3102 in FIG. 3a, Step S3202 in FIG. 3b, Step S3501 in FIG. 3e and Step S3601 in FIG. 3f as well as the other associated parts in the embodiments involved in FIG. 2, FIG. 3a, FIG. 3b, FIG. 3e and FIG. 3f, and thus will not be particularly defined herein.

**Step S1003:** the PCF sends a third message to an SMF based on the AF session establishment request.

In some embodiments of the present disclosure, the PCF determines that the AF session establishment request does not include a first message, and sends the third message to the SMF based on default information.

Illustratively, the default information indicates that a first node for measuring a QoS data flow is an access network device, and indicates that a sending mode for a measurement result of the QoS data flow is sending, by the access network device, the measurement result of the QoS data flow to the AF via the SMF, the PCF and a NEF.

**Step S1004:** the SMF configures the first node for measuring the QoS data flow and/or the sending mode for the measurement result of the QoS data flow based on the third message.

In some embodiments of the present disclosure, the SMF determines that the third message does not include the first message, and configures the first node for measuring the QoS data flow and/or the sending mode for the measurement result of the QoS data flow based on default information.

The default information indicates that the first node for measuring the QoS data flow is the access network device, and indicates that the sending mode for the measurement result of the QoS data flow is sending, by the access network device, the measurement result of the QoS data flow to the AF via the SMF, the PCF and the NEF.

An optional implementation mode of Step S1004 may refer to the optional implementation modes of Step S2104-1 in FIG. 2, Step S5102 in FIG. 5a, Step S5202 in FIG. 5b, Step S5302 in FIG. 5c and Step S5402 in FIG. 5d as well as the other associated parts in the embodiments involved in FIG. 2, FIG. 5a, FIG. 5b and FIG. 5c, and thus will not be particularly defined herein.

**Step S1005:** the UPF receives a sixth message sent by the SMF, and updates session context information about the UPF based on the sixth message.

An optional implementation mode of Step S1005 may refer to the optional implementation modes of Step S2105-1 in FIG. 2, Steps S6101 and S6102 in FIG. 6a, Steps S6201 and S6202 in FIG. 6b, Steps S6301 and S6302 in FIG. 6c, Steps S6401 and S6402 in FIG. 6d, and Steps S6501 and S6502 in FIG. 6e as well as the other associated parts in the embodiments involved in FIG. 2, FIG. 6a, FIG. 6b, FIG. 6c, FIG. 6d and FIG. 6e, and thus will not be particularly defined herein.

**Step S1006:** the access network device receives a seventh message sent by an AMF.

An optional implementation mode of Step S1006 may refer to the optional implementation modes of Step S2106-1 in FIG. 2, Step S7101 in FIG. 7a, Step S7201 in FIG. 7b, Step S7301 in FIG. 7c and Step S7401 in FIG. 7d as well as the other associated parts in the embodiments involved in FIG. 2, FIG. 7a, FIG. 7b, FIG. 7c and FIG. 7d, and thus will not be particularly defined herein.

In some embodiments of the present disclosure, Steps S1001, S1005 and S1006 are optional, and one or more steps in these step may be omitted or replaced with the other steps in different embodiments.

In an embodiment of the present disclosure, part of or all of the steps and the optional implementation modes thereof may be combined with part of or all of the steps in the other embodiments of the present disclosure, or combined with the optional implementation modes in the other embodiments of the present disclosure.

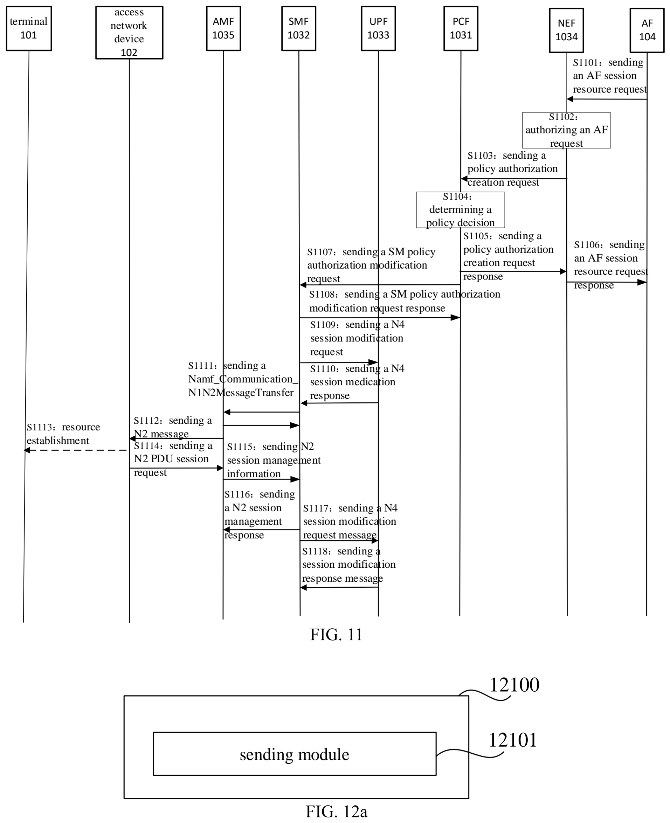

FIG. 11 is a schematic view showing an interaction of a measurement method according to an embodiment of the present disclosure. As shown in FIG. 11, the measurement method involved in the embodiments of the present disclosure includes the following steps.

**Step S1101:** an AF session resource request is sent by an AF.

Illustratively, the AF creates the AF session resource request via a Nnef_AFsessionWithQoS_Create request. QoS requirements on data flows for an XRM service and an interactive media service are carried by the AF in a request message.

In some embodiments of the present disclosure, the AF sends a measurement indication and/or a QoS information exposure indication to a 5G core network (NEF/PCF), and the AF provides the measurement indication and/or the QoS information exposure indication to the NEF/PCF in an AF QoS request process.

In some embodiments of the present disclosure, the measurement indication is used to indicate (e.g., a NF) to measure the QoS information (e.g., an access network device, a UPF, or both the access network device and the UPF). The QoS information exposure indication is used to indicate a sending mode for a measurement result of the QoS data flow. Illustratively, the QoS information exposure indication is used to indicate how to send the measurement result to a target NF: the access network device sends the measurement result to the AF via the SMF and the PCF; the access network device sends the measurement result to the AF via the UPF, the SMF and the PCF; the access network device sends the measurement result to the AF via the UPF; the UPF sends the measurement result to the AF via the SMF and the PCF; the UPF directly sends the measurement result to the AF; the access network device sends the measurement result to the AF via the SMF, the PCF and a NEF; the access network device sends the measurement result to the AF via the UPF, the SMF, the PCF and the NEF; the access network device sends the measurement result to the AF via the UPF and the NEF; the UPF sends the measurement result to the AF via the SMF, the PCF and the NEF; and the UPF sends the measurement result to the AF via the NEF.

Optionally, the measurement indication and/or the QoS information exposure indication carry XRM service information, an identifier of a data flow or a data flow group of an XRM service (e.g., multi-modal service ID), a UE address/UE identifier, an AF application ID, flow description, DNN, S-NSSAI, or a QoS parameter. The multi-modal service ID is used to identify all data flows in an XRM service group.

**Step S1102:** the NEF authorizes an AF request.

In some embodiments of the present disclosure, in a case that the AF is an untrusted AF, the AF request is sent by the NEF to the PCF.

Optionally, the NEF performs relevant mapping, which includes mapping from an XRM service (AF-Service-Identifier) to the DNN and the S-NSSAI, mapping from an external application to a CN application ID, mapping from an external UE ID to a UE ID in the CN based on UDM subscription information, and mapping of an XRM service group ID from outside to inside based on the UDM subscription information.

**Step S1103:** the NEF sends a policy authorization creation request to the PCF.

In some embodiments of the present disclosure, the policy authorization creation request is a Npcf_PolicyAuthorization_Create request.

In some embodiments of the present disclosure, the NEF authorizes the AF request based on a parameter provided by the AF, and determines whether to trigger a TSCTSF or directly establish a connection with the PCF, and the PCF receives an attribute provided by the AF from the NEF or TSCTSF.

It should be appreciated that the above signaling steps are the same as the signaling steps for setting an AF session for the desired QoS program in Section 4.15.6.6 in TS 23.502.

**Step S1104:** the PCF determines a policy decision.

In some embodiments of the present disclosure, the PCF determines updated or new policy information to be sent to the SMF.

In some embodiments of the present disclosure, the PCF determines a PCC rule based on the measurement indication and/or the QoS information exposure indication, and sends the measurement indication and/or the QoS information exposure indication to the SMF based on the PCC rule.

In some embodiments of the present disclosure, the PCF determines the measurement indication and/or the QoS information exposure indication based on a rule provided by the AF/NEF and/or an operator's policy (e.g., a local or OAM configuration) (which further covers a scenario where the AF does not send a relevant indication).

**Step S1105:** the PCF sends a policy authorization creation request response to the NEF.

In some embodiments of the present disclosure, the policy authorization creation request response is a Npcf_Policy Authorization_Create response.

**Step S1106:** the NEF sends an AF session resource request message to the AF.

In some embodiments of the present disclosure, the AF session resource request response is a Nnef_AFsessionWithQoS_Create response.

In some embodiments of the present disclosure, a result is carried in the Nnef_AFsessionWithQoS_Create response, so as to notify the AF whether the request is authorized.

**Step S1107:** the PCF sends a SM policy authorization modification request to the SMF.

In some embodiments of the present disclosure, the SM policy authorization modification request is a SM Policy Association Modification Request (PCC rule (the measurement indication and/or the QoS information exposure indication)).

In some embodiments of the present disclosure, upon the receipt of the PCC rule, the SMF configures the UPF and/or the RAN, performs QoS monitoring on the QoS data flow (or all QoS data flows of a session), and sends a monitoring result based on relevant parameters (a QoS parameter to be measured, a reporting period, a reporting frequency and the QoS information exposure indication).

In some embodiments of the present disclosure, the SMF determines that the UPF and/or the RAN perform measurement and monitoring based on the measurement indication, and determines a sending mode for a monitoring result based on the QoS information exposure indication.

In some embodiments of the present disclosure, the SMF determines the measurement indication and/or the QoS information exposure indication based on a rule provided by the PCF and/or an operator's policy (e.g., a local or OAM configuration) (which further covers a scenario where the AF does not send relevant indication).

**Step S1108:** the SMF sends a SM policy authorization modification request response to the PCF.

**Step S1109:** the SMF sends a N4 session modification request to the UPF.

In some embodiments of the present disclosure, the N4 session modification request is expressed as N4 Session Modification Request (the measurement indication and/or the QoS information exposure indication).

**Step S1110:** the UPF sends a N4 session modification response to the SMF.

**Step S1111:** the SMF sends a Namf_Communication_N1N2MessageTransfer to the AMF.

In some embodiments of the present disclosure, the Namf_Communication_N1N2MessageTransfer is expressed as a Namf_Communication_N1N2MessageTransfer ([N2 SM information] (PDU Session ID, QFI(s), QoS Profile(s)), N1 SM container)), where N2 SM information includes the measurement indication and the QoS information exposure indication, PDU Session ID represents an identifier of a PDU session, QFI(s) represents a QoS flow identifier, and N1 SM container represents a N1 session management container.

**Step S1112:** the AMF sends a N2 message to the RAN.

In some embodiments of the present disclosure, the N2 message is expressed as N2 ([N2 SM information], NAS message (PDU Session ID, N1 SM container (PDU Session Modification Command))), where N2 SM information is received from the SMF, and the PDU Session Modification Command represents a command for modifying the PDU session.

**Step S1113:** a resource is established between the RAN and the UE.

**Step S1114:** the RAN sends a N2 PDU session request to the AMF.

In some embodiments of the present disclosure, the RAN sends a N2 PDU session request to the AMF via a N2 PDU Session Ack Message.

In some embodiments of the present disclosure, the RAN may also be an AN.

**Step S1115:** the AMF sends N2 session management information to the SMF.

In some embodiments of the present disclosure, the N2 session management information is expressed as N2 SM information.

In some embodiments of the present disclosure, the AMF receives the N2 session management information sent by the RAN, and sends the N2 session management information to the SMF via a Nsmf_PDUSession_UpdateSMContext.

**Step S1116:** the SMF sends a N2 session management response.

In some embodiments of the present disclosure, the SMF sends the session management response via the Nsmf_PDUSession_UpdateSMContext.

**Step S1117:** the SMF sends a N4 session modification request message to the UPF.

In some embodiments of the present disclosure, the SMF sends the N4 session modification request message to the UPF, and updates a N4 session for the UPF involved in the PDU session modification.

**Step S1118:** the UPF sends a session modification response message to the SMF.

The PDU session establishment is completed, and the relevant QoS monitoring configuration is completed (including the NFs for performing the monitoring and the measurement, the NFs which take charge of sending the message, and the paths through which the message is sent), and then the UPF/RAN performs the QoS monitoring and measurement on the corresponding XRM QoS data flow, and sends the monitoring result.

FIG. 12a is a schematic view showing a first measurement apparatus according to an embodiment of the present disclosure. As shown in FIG. 12a, the first measurement apparatus 12100 includes a sending module 12101, the sending module 12101 is configured to send a first message to a PCF, and the first message indicates a first node for measuring a QoS data flow and/or a sending mode for a measurement result of the QoS data flow.

Optionally, the sending module 12101 is configured to implement the steps executed by the AF 1031 and associated with the sending of the first message in any of the above-mentioned measurement methods, which will not be particularly defined herein.

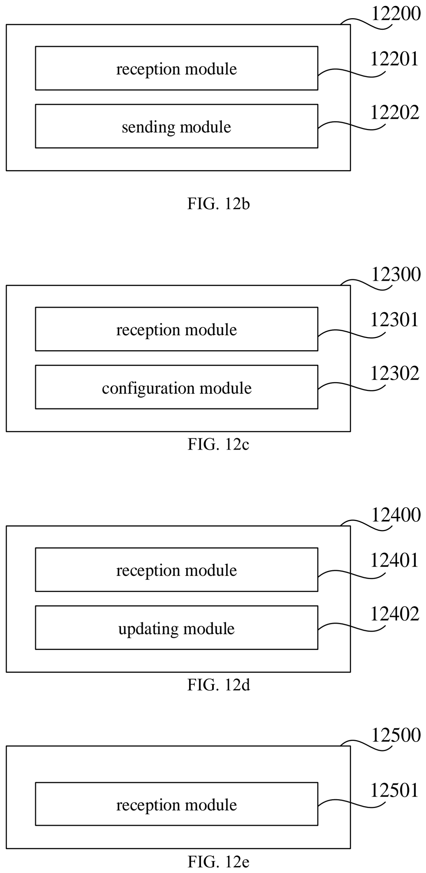

FIG. 12b is a schematic view showing a second measurement apparatus according to an embodiment of the present disclosure. As shown in FIG. 12b, the second measurement apparatus 12200 includes a reception module 12201 and a sending module 12202. The reception module 12201 is configured to receive a first message sent by an AF, the first message indicates a first node and/or a sending mode for a measurement result of a QoS data flow, and the first node is configured to measure the QoS data flow. The sending module 12202 is configured to send a third message to an SMF based on the first message, and the third message is used by the SMF to configure the first node for measuring the QoS data flow and/or the sending mode for the measurement result of the QoS data flow.

Optionally, the reception module 12201 is configured to implement the steps executed by the PCF 1032 and associated with the reception of the first message in any of the above-mentioned measurement methods, which will not be particularly defined herein. The sending module 12202 is configured to implement the steps executed by the PCF 1032 and associated with the sending of the third message in any of the above-mentioned measurement methods, which will not be particularly defined herein.

FIG. 12c is a schematic view showing a third measurement apparatus according to an embodiment of the present disclosure. As shown in FIG. 12c, the third measurement apparatus 12300 includes a reception module 12301 and a configuration module 12302. The reception module 12301 is configured to receive a third message sent by a PCF, the first message indicates a first node and/or a sending mode for a measurement result of a QoS data flow, and the first node is configured to measure the QoS data flow. The configuration module 12302 is configured to configure the first node for measuring the QoS data flow and/or the sending mode for the measurement result of the QoS data flow based on the third message.

Optionally, the reception module 12301 is configured to implement the steps executed by the SMF 1033 and associated with the reception of the third message in any of the above-mentioned measurement methods, which will not be particularly defined herein. The configuration module 12302 is configured to implement the steps executed by the SMF 1033 and associated with the first node and the configuration of the sending mode in any of the above-mentioned measurement methods, which will not be particularly defined herein.

FIG. 12d is a schematic view showing a fourth measurement apparatus according to an embodiment of the present disclosure. As shown in FIG. 12d, the fourth measurement apparatus 12400 includes a reception module 12401 and an updating module 12402. The reception module 12401 is configured to receive a sixth message sent by an SMF, the sixth message includes a first message, the first message indicates a first node and/or a sending mode for a measurement result of a QoS data flow, and the first node is configured to measure the QoS data flow. The updating module 12402 is configured to update session context information about a UPF based on the sixth message.

Optionally, the reception module 12401 is configured to implement the steps executed by the UPF 1034 and associated with the reception of the sixth message in any of the above-mentioned measurement methods, which will not be particularly defined herein. The updating module 12402 is configured to implement the steps executed by the UPF 1034 and associated with the updating of the session context information about the UPF in any of the above-mentioned measurement methods, which will not be particularly defined herein.

FIG. 12e is a schematic view showing a fifth measurement apparatus according to an embodiment of the present disclosure. As shown in FIG. 12e, the fifth measurement apparatus 12500 includes a reception module 12501. The reception module 12501 is configured to receive a seventh message sent by an AMF, the seventh message is sent by the AMF based on a fourth message sent by an SMF, the fourth message includes a first message, the first message indicates a first node and/or a sending mode for a measurement result of a QoS data flow, and the first node is configured to measure the QoS data flow.

Optionally, the reception module 12501 is configured to implement the steps executed by the access network device 102 and associated with the reception of the seventh message in any of the above-mentioned measurement methods, which will not be particularly defined herein.

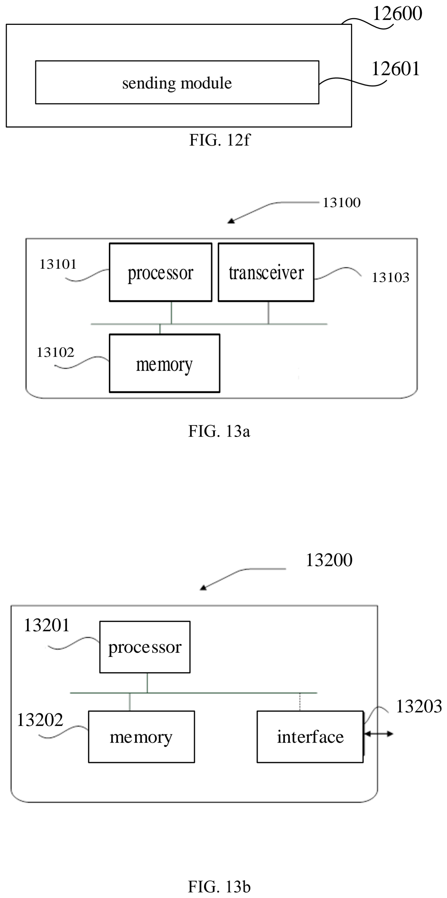

FIG. 12f is a schematic view showing a sixth measurement apparatus according to an embodiment of the present disclosure. As shown in FIG. 12f, the sixth measurement apparatus 12600 includes a sending module 12601. The sending module 12601 is configured to send a second message to an AF, the second message includes QoS requirement information, the second message indicates the AF to send a first message to a PCF, the first message indicates a first node and/or a sending mode for a measurement result of a QoS data flow, and the first node is configured to measure the QoS data flow.

Optionally, the sending module 12601 is configured to implement the steps executed by the terminal 101 and associated with the sending of the second message in any of the above-mentioned measurement methods, which will not be particularly defined herein.

FIG. 13a is a schematic view showing a communication device 13100 according to an embodiment of the present disclosure. The communication device 13100 is a network device (e.g., an access network device or a core network device), a terminal (e.g., a UE), a chip, a chip system or a processor for supporting the network device to implement any of the above-mentioned measurement methods, or a chip, a chip system or a processor for supporting the terminal to implement any of the above-mentioned measurement methods. The communication device 13100 is configured to implement the measurement methods described in the above-mentioned method embodiments, and reference may be made to the description in the above-mentioned method embodiments.

As shown in FIG. 13a, the communication device 13100 includes one or more processors 13101. The one or more processors 13101 may be a general-purpose processor or special-purpose processor, e.g., a baseband processor or a central processing unit. The baseband processor is configured to process a communication protocol as well as communication data, and the central processing unit is configured to control the communication device (e.g., a base station, a baseband chip, a terminal device, a terminal device chip, a DU or a CU), execute a computer program, and process data in the computer program. The processor 13101 is configured to call an instruction to enable the communication device 13100 to implement any of the above-mentioned measurement methods.

In some embodiments of the present disclosure, the communication device 13100 further includes one or more memories 13102 storing therein instructions. Optionally, all or part of the memories 13102 may also be arranged outside the communication device 13100.

In some embodiments of the present disclosure, the communication device 13100 further includes one or more transceivers 13103. In a case that the communication device 13100 includes the one or more transceivers 13103, the communication steps in the above-mentioned methods, e.g., the sending steps and the receiving steps, are executed by the transceiver 13103, and the other steps are executed by the processor 13101.

In some embodiments of the present disclosure, the transceiver includes a receiver and a transmitter. The receiver is separated from, or integrated with, the transmitter. Optionally, such terms as transceiver, transceiver unit, transceiver machine and transceiver circuit may be replaced with each other, such terms as transmitter, transmission unit, transmission machine and transmission circuit may be replaced with each other, and such terms as receiver, reception unit, reception machine and reception circuit may be replaced with each other.

Optionally, the communication device 13100 further includes one or more interface circuits 13104, and the one or more interface circuits 13104 are coupled to the memory 13102. The interface circuit 13104 is configured to receive a signal from the memory 13102 or the other apparatus, and/or send a signal to the memory 13102 or the other apparatus. For example, the interface circuit 13104 is configured to read instructions stored in the memory 13102, and send the instructions to the processor 13101.

The communication device 13100 described in the above embodiments of the present disclosure is a network device or a terminal, but a scope of the communication device 13100 is not limited thereto. The structure of the communication device 13100 is not limited to that in FIG. 13a. The communication device may be an independent device or a part of a large device. For example, the communication device may be: (1) an independent integrated circuit (IC), chip, chip system or chip sub-system; (2) a set of one or more ICs (optionally, the IC set also includes a memory member for storing therein data and a computer program); (3) an application specific integrated circuit (ASIC), e.g., a Modem; (4) a module capable of being embedded into the other device; (5) a receiver, a terminal device, a smart terminal device, a cellular phone, a wireless device, a handheld device, a mobile unit, a vehicle-mounted device, a network device, a cloud device, an artificial intelligence device, etc.; or (6) the other device.

FIG. 13b is a schematic view showing a chip 13200 according to an embodiment of the present disclosure. In a case that the communication device 13100 is a chip or a chip system, the structure may refer to the chip 13200 in FIG. 13b, but the present disclosure is not limited thereto.

The chip 13200 includes one or more processors 13201, and the processor 13201 is configured to call instructions to enable the chip 13200 to implement any of the above-mentioned measurement methods.

In some embodiments of the present disclosure, the chip 13200 further includes one or more interface circuits 13202. The interface circuit 13202 is coupled to a memory 13203, and configured to receive a signal from the memory 13203 or the other apparatus, and/or send a signal to the memory 13203 or the other apparatus. For example, the interface circuit 13202 is configured to read instructions stored in the memory 13203, and send the instructions to the processor 13201. Optionally, such terms as interface circuit, interface, transceiver pin and transceiver may be replaced with each other.

In some embodiments of the present disclosure, the chip 13200 further includes one or more memories 13203 storing therein instructions. Optionally, all of or part of the memories 13202 may be arranged outside the chip 13200.

The present disclosure further provides in some embodiments a storage medium storing therein instructions. In a case that the instructions are executed by the communication device 13100, the communication device 13100 implements any of the above-mentioned measurement methods. Optionally, the storage medium is an electronic storage medium. Optionally, the storage medium is, but not limited to, a computer-readable storage medium, and it may also be any other apparatus-readable storage medium. Optionally, the storage medium is, but not limited to, a non-transitory storage medium, and it may also be a transitory storage medium.

The present disclosure further provides in some embodiments a program product. In a case that the program product is executed by the communication device 13100, the communication device 13100 implements any of the above-mentioned measurement methods. Optionally, the program product is a computer program product.

The present disclosure further provides in some embodiments a computer program. In a case that the computer program is executed by a computer, the computer implements any of the above-mentioned measurement methods.

## Claims

1. A measurement method, executed by an application function (AF), comprising:
sending a first message to a policy control function (PCF), wherein the first message indicates a first node and/or a sending mode for a measurement result of a quality of service (QoS) data flow, and the first node is configured to measure the QoS data flow.

2. The measurement method according to claim 1, wherein the first node comprises at least one of:
an access network device; or
a user plane function (UPF).

3. The measurement method according to claim 1 or 2, wherein the sending mode for the measurement result of the QoS data flow comprises at least one of:
sending, by the access network device, the measurement result of the QoS data flow to the AF via a session management function (SMF) and the PCF;
sending, by the access network device, the measurement result of the QoS data flow to the AF via the UPF, the SMF and the PCF;
sending, by the access network device, the measurement result of the QoS data flow to the AF via the UPF;
sending, by the UPF, the measurement result of the QoS data flow to the AF via the SMF and the PCF;
sending, by the UPF, the measurement result of the QoS data flow to the AF;
sending, by the access network device, the measurement result of the QoS data flow to the AF via the SMF, the PCF and a network exposure function (NEF);
sending, by the access network device, the measurement result of the QoS data flow to the AF via the UPF, the SMF, the PCF and the NEF;
sending, by the access network device, the measurement result of the QoS data flow to the AF via the UPF and the NEF;
sending, by the UPF, the measurement result of the QoS data flow to the AF via the SMF, the PCF and the NEF; or
sending, by the UPF, the measurement result of the QoS data flow to the AF via the NEF.

4. A measurement method, executed by a PCF, comprising:
receiving a first message sent by an AF, wherein the first message indicates a first node and/or a sending mode for a measurement result of a QoS data flow, and the first node is configured to measure the QoS data flow; and
sending a third message to an SMF based on the first message, wherein the third message is used by the SMF to configure the first node for measuring the QoS data flow and/or the sending mode for the measurement result of the QoS data flow.

5. The measurement method according to claim 4, wherein the first node comprises at least one of:
an access network device; or
a UPF.

6. The measurement method according to claim 4 or 5, wherein the sending mode for the measurement result of the QoS data flow comprises at least one of:
sending, by the access network device, the measurement result of the QoS data flow to the AF via the SMF and the PCF;
sending, by the access network device, the measurement result of the QoS data flow to the AF via the UPF, the SMF and the PCF;
sending, by the access network device, the measurement result of the QoS data flow to the AF via the UPF;
sending, by the UPF, the measurement result of the QoS data flow to the AF via the SMF and the PCF;
sending, by the UPF, the measurement result of the QoS data flow to the AF;
sending, by the access network device, the measurement result of the QoS data flow to the AF via the SMF, the PCF and a NEF;
sending, by the access network device, the measurement result of the QoS data flow to the AF via the UPF, the SMF, the PCF and the NEF;
sending, by the access network device, the measurement result of the QoS data flow to the AF via the UPF and the NEF;
sending, by the UPF, the measurement result of the QoS data flow to the AF via the SMF, the PCF and the NEF; or
sending, by the UPF, the measurement result of the QoS data flow to the AF via the NEF.

7. A measurement method, executed by an SMF, comprising:
receiving a third message sent by a PCF, wherein the third message indicates a first node and/or a sending mode for a measurement result of a QoS data flow, and the first node is configured to measure the QoS data flow; and
configuring the first node for measuring the QoS data flow and/or the sending mode for the measurement result of the QoS data flow based on the third message.

8. The measurement method according to claim 7, further comprising:
sending a fourth message to an access and mobility management function (AMF), wherein the fourth message comprises a first message; and
receiving a fifth message sent by the AMF, wherein the fifth message is used to update session context information about the SMF.

9. The measurement method according to claim 7 or 8, wherein the first node comprises at least one of:
an access network device; or
a UPF.

10. The measurement method according to any one of claims 7 to 9, wherein the sending mode for the measurement result of the QoS data flow comprises at least one of:
sending, by the access network device, the measurement result of the QoS data flow to an AF via the SMF and the PCF;
sending, by the access network device, the measurement result of the QoS data flow to the AF via the UPF, the SMF and the PCF;
sending, by the access network device, the measurement result of the QoS data flow to the AF via the UPF;
sending, by the UPF, the measurement result of the QoS data flow to the AF via the SMF and the PCF;
sending, by the UPF, the measurement result of the QoS data flow to the AF;
sending, by the access network device, the measurement result of the QoS data flow to the AF via the SMF, the PCF and a NEF;
sending, by the access network device, the measurement result of the QoS data flow to the AF via the UPF, the SMF, the PCF and the NEF;
sending, by the access network device, the measurement result of the QoS data flow to the AF via the UPF and the NEF;
sending, by the UPF, the measurement result of the QoS data flow to the AF via the SMF, the PCF and the NEF; or
sending, by the UPF, the measurement result of the QoS data flow to the AF via the NEF.

11. A measurement method, executed by a UPF, comprising:
receiving a sixth message sent by an SMF, wherein the sixth message comprises a first message, the first message indicates a first node and/or a sending mode for a measurement result of the QoS data flow, and the first node is configured to measure the QoS data flow; and
updating session context information about the UPF based on the sixth message.

12. The measurement method according to claim 11, wherein the first node comprises at least one of:
an access network device; or
the UPF.

13. The measurement method according to claim 12, further comprising:
determining that the first node comprises the UPF, and measuring the QoS data flow; and/or
determining that the first node comprises the access network device, and receiving the measurement result of the QoS data flow sent by the access network device.

14. The measurement method according to any one of claims 11 to 13, wherein the sending mode for the measurement result of the QoS data flow comprises at least one of:
sending, by the access network device, the measurement result of the QoS data flow to an AF via the SMF and a PCF;
sending, by the access network device, the measurement result of the QoS data flow to the AF via the UPF, the SMF and the PCF;
sending, by the access network device, the measurement result of the QoS data flow to the AF via the UPF;
sending, by the UPF, the measurement result of the QoS data flow to the AF via the SMF and the PCF;
sending, by the UPF, the measurement result of the QoS data flow to the AF;
sending, by the access network device, the measurement result of the QoS data flow to the AF via the SMF, the PCF and a NEF;
sending, by the access network device, the measurement result of the QoS data flow to the AF via the UPF, the SMF, the PCF and the NEF;
sending, by the access network device, the measurement result of the QoS data flow to the AF via the UPF and the NEF;
sending, by the UPF, the measurement result of the QoS data flow to the AF via the SMF, the PCF and the NEF; and
sending, by the UPF, the measurement result of the QoS data flow to the AF via the NEF.

15. The measurement method according to claim 14, further comprising at least one of:
sending the measurement result of the QoS data flow to the AF via the SMF and the PCF;
sending the measurement result of the QoS data flow to the AF;
sending the measurement result of the QoS data flow to the AF via the SMF, the PCF and the NEF; or
sending the measurement result of the QoS data flow to the AF via the NEF.

16. A measurement method, executed by an access network device, comprising:
receiving a seventh message sent by an AMF, wherein the seventh message is sent by the AMF based on a fourth message sent by an SMF, the fourth message comprises a first message, the first message indicates a first node and/or a sending mode for a measurement result of a QoS data flow, and the first node is configured to measure the QoS data flow.

17. The measurement method according to claim 16, wherein the first node comprises at least one of:
the access network device; or
a UPF.

18. The measurement method according to claim 17, further comprising:
determining that the first node comprises the access network device;
measuring the QoS data flow; and
sending the measurement result of the QoS data flow to the UPF.

19. The measurement method according to any one of claims 16 to 18, wherein the sending mode for the measurement result of the QoS data flow comprises at least one of:
sending, by the access network device, the measurement result of the QoS data flow to an AF via the SMF and a PCF;
sending, by the access network device, the measurement result of the QoS data flow to the AF via the UPF, the SMF and the PCF;
sending, by the access network device, the measurement result of the QoS data flow to the AF via the UPF;
sending, by the UPF, the measurement result of the QoS data flow to the AF via the SMF and the PCF;
sending, by the UPF, the measurement result of the QoS data flow to the AF;
sending, by the access network device, the measurement result of the QoS data flow to the AF via the SMF, the PCF and a NEF;
sending, by the access network device, the measurement result of the QoS data flow to the AF via the UPF, the SMF, the PCF and the NEF;
sending, by the access network device, the measurement result of the QoS data flow to the AF via the UPF and the NEF;
sending, by the UPF, the measurement result of the QoS data flow to the AF via the SMF, the PCF and the NEF; or
sending, by the UPF, the measurement result of the QoS data flow to the AF via the NEF.

20. The measurement method according to claim 19, further comprising:
sending the measurement result of the QoS data flow to the AF via the SMF and the PCF;
sending the measurement result of the QoS data flow to the AF via the UPF, the SMF and the PCF;
sending the measurement result of the QoS data flow to the AF via the UPF;
sending the measurement result of the QoS data flow to the AF via the SMF, the PCF and the NEF;
sending the measurement result of the QoS data flow to the AF via the UPF, the SMF, the PCF and the NEF; or
sending the measurement result of the QoS data flow to the AF via the UPF and the NEF.

21. A measurement method, executed by a communication system, wherein the communication system comprises an AF, and the measurement method comprises:
sending, by the AF, a first message to a PCF, wherein the first message indicates a first node and/or a sending mode for a measurement result of a QoS data flow, and the first node is configured to measure the QoS data flow.

22. A measurement method, executed by a communication system, wherein the communication system comprises an AF, a PCF, an SMF, a UPF and an access network device, and the measurement method comprises:
sending, by the AF, a first message to the PCF, wherein the first message indicates a first node and/or a sending mode for a measurement result of a QoS data flow, and the first node is configured to measure the QoS data flow;
sending, by the PCF, a third message to the SMF based on the first message, wherein the third message is used by the SMF to configure the first node for measuring the QoS data flow and/or the sending mode for the measurement result of the QoS data flow;
configuring, by the SMF, the first node for measuring the QoS data flow and/or the sending mode for the measurement result of the QoS data flow based on the third message;
receiving, by the SMF, a sixth message sent by the SMF, and updating session context information about the UPF based on the sixth message, wherein the sixth message comprises the first message; and
receiving, by the access network device, a seventh message sent by an AMF, wherein the seventh message is sent by the AMF based on a fourth message sent by the SMF, and the fourth message comprises the first message.

23. A first measurement apparatus, comprising:
a sending module configured to send a first message to a PCF, wherein the first message indicates a first node and/or a sending mode for a measurement result of a QoS data flow, and the first node is configured to measure the QoS data flow.

24. A second measurement apparatus, comprising:
a reception module configured to receive a first message sent by an AF, wherein the first message indicates a first node and/or a sending mode for a measurement result of a QoS data flow, and the first node is configured to measure the QoS data flow; and
a sending module configured to send a third message to an SMF based on the first message, wherein the third message is used by the SMF to configure the first node for measuring the QoS data flow and/or the sending mode for the measurement data of the QoS flow.

25. A third measurement apparatus, comprising:
a reception module configured to receive a third message sent by a PCF, wherein the third message indicates a first node and/or a sending mode for a measurement result of a QoS data flow, and the first node is configured to measure the QoS data flow; and
a configuration module configured to configure the first node for measuring the QoS data flow and/or the sending mode for the measurement result of the QoS data flow based on the third message.

26. A fourth measurement apparatus, comprising:
a reception module configured to receive a sixth message sent by an SMF, wherein the sixth message comprises a first message, the first message indicates a first node and/or a sending mode for a measurement result of a QoS data flow, and the first node is configured to measure the QoS data flow; and
an updating module configured to update session context information about a UPF based on the sixth message.

27. A fifth measurement apparatus, comprising:
a reception module configured to receive a seventh message sent by an AMF, wherein the seventh message is sent by the AMF based on a fourth message sent by an SMF, the fourth message comprises a first message, the first message indicates a first node and/or a sending mode for a measurement result of a QoS data flow, and the first node is configured to measure the QoS data flow.

28. A communication device, comprising:
one or more processors,
wherein the one or more processors are configured to call a computer instruction to enable the communication device to implement the measurement method according to any one of claims 1 to 3, claims 4 to 6, claims 7 to 10, claims 11 to 15, or claims 16 to 20.

29. A communication system, comprising an AF, a PCF, an SMF, a UPF, an access network device and a terminal, wherein the AF is configured to implement the measurement method according to any one of claims 1 to 3, the PCF is configured to implement the measurement method according to any one of claims 4 to 6, the SMF is configured to implement the measurement method according to any one of claims 7 to 10, the UPF is configured to implement the measurement method according to any one of claims 11 to 15, and the access network device is configured to implement the measurement method according to any one of claims 16 to 20.

30. A storage medium storing therein instructions, wherein in a case that the instructions are executed by a communication device, the communication device implements the measurement method according to any one of claims 1 to 3, claims 4 to 6, claims 7 to 10, claims 11 to 15, or claims 16 to 20.
